# EUROPEAN PATENT APPLICATION

(11) **EP 2 255 855 A2**
(43) Date of publication of application: **01.12.2010**
(21) Application number: 10158342.5
(22) Date of filing: 30.03.2010
(51) Int. Cl.: A63F 13/10

(54) **Image generation system, image generation method, and computer program product**

(30) Priority: 30.03.2009 JP 2009083802
(71) Applicant: NAMCO BANDAI Games Inc., Shinagawa-ku Tokyo 140-8590 (JP)
(72) Inventor: Hato, Yoshikazu, Shinagawa-ku, Tokyo 140-8590 (JP); Itou, Daisuke, Shinagawa-ku, Tokyo 140-8590 (JP)
(74) Representative: Emerson, Peter James

(57) **Abstract**

An image generation system includes an operation information acquisition section that acquires operation information based on sensor information from a controller that includes a sensor, the operation information acquisition section acquiring rotation angle information about the controller around a given coordinate axis as the operation information, a hit calculation section that performs a hit calculation process, the hit calculation process setting at least one of a moving state and an action state of a hit target that has been hit by a hit object based on the rotation angle information that has been acquired by the operation information acquisition section, and an image generation section that generates an image based on the operation information.

## Description

### BACKGROUND

The present invention relates to an image generation system, an image generation method, a computer program product, and the like.

An image generation system (game system) that generates an image viewed from a virtual camera (given viewpoint) in an object space (virtual three-dimensional space) in which an object (e.g., a character that imitates a sports player) is disposed, has been known. Such an image generation system is very popular as a system that allows experience of virtual reality. For example, an image generation system that implements a tennis game allows the player to operate the player's character using an operation section (e.g., controller) so that the player's character hits a ball back that has been hit by a character operated by another player or a computer to enjoy the game. JP-A-2008-307166 discloses an image generation system that allows the player to enjoy such a tennis game, for example.

However, an image generation system that sets the rotation state of a ball that has been hit by a racket or the like based on the rotation angle information about the controller has not been disclosed. Therefore, the player cannot selectively play a topspin shot or a slice shot by utilizing the side of the racket.

### SUMMARY

According to one aspect of the invention, there is provided an image generation system comprising:
an operation information acquisition section that acquires operation information based on sensor information from a controller that includes a sensor, the operation information acquisition section acquiring rotation angle information about the controller around a given coordinate axis as the operation information; a hit calculation section that performs a hit calculation process, the hit calculation process setting at least one of a moving state and an action state of a hit target that has been hit by a hit object based on the rotation angle information that has been acquired by the operation information acquisition section; and
an image generation section that generates an image based on the operation information.

According to another aspect of the invention, there is provided an image generation method comprising:
acquiring operation information based on sensor information from a controller that includes a sensor, rotation angle information about the controller around a given coordinate axis being acquired as the operation information;
performing a hit calculation process that sets at least one of a moving state and an action state of a hit target that has been hit by a hit object based on the acquired rotation angle information; and
generating an image based on the operation information.

According to another aspect of the invention, there is provided a computer program product storing a program code that causes a computer to execute the above image generation method.

### BRIEF DESCRIPTION OF THE DRAWINGS

FIG. 1 shows a configuration example of an information generation system according to one embodiment of the invention.
FIG. 2 is a view illustrative of a state in which a player operates a controller.
FIGS. 3A and 3B show a configuration example of a controller.
FIG. 4 is a view illustrative of rotation angle information about a controller around each coordinate axis.
FIG. 5A and 5B show examples of a swing motion of a character.
FIG. 6 shows an example of a swing motion of a character.
FIGS. 7A to 7C are views illustrative of a hit calculation process based on rotation angle information when a hit has occurred.
FIGS. 8A to 8C are views illustrative of a hit calculation process based on rotation angle information acquired during a hit determination period.
FIGS. 9A to 9D are views illustrative of the moving state and the action state of a ball that has been hit.
FIG. 10 is a view illustrative of a method of setting hit force information about a ball based on acceleration information.
FIG. 11 is a view illustrative of a reference position detection method.
FIGS. 12A to 12F are views illustrative of a hit determination area setting method.
FIGS. 13A to 13C are views illustrative of application examples of one embodiment of the invention.
FIG. 14 is a view illustrative of a motion blend process.
FIG. 15 is a view illustrative of motion data.
FIGS. 16A and 16B show examples of a reference motion.
FIGS. 17A and 17B show examples of a reference motion.
FIGS. 18A and 18B are views illustrative of rotation angle information about a controller.
FIG. 19 is a view illustrative of a motion blend method according to one embodiment of the invention.
FIG. 20 is a view illustrative of a motion blend method according to one embodiment of the invention.
FIG. 21 is a view illustrative of a motion blend method according to one embodiment of the invention.
FIG. 22 is a flowchart showing a specific processing example according to one embodiment of the invention.
FIG. 23 is a flowchart showing a specific processing example according to one embodiment of the invention.

### DESCRIPTION OF EXEMPLARY EMBODIMENTS

Several aspects of the invention may provide an image generation system, an image generation method, a computer program product, and the like that can implement a hit calculation process taking account of the rotation angle information about the controller.

According to one embodiment of the invention, there is provided an image generation system comprising:
an operation information acquisition section that acquires operation information based on sensor information from a controller that includes a sensor, the operation information acquisition section acquiring rotation angle information about the controller around a given coordinate axis as the operation information;
a hit calculation section that performs a hit calculation process, the hit calculation process setting at least one of a moving state and an action state of a hit target that has been hit by a hit object based on the rotation angle information that has been acquired by the operation information acquisition section; and
an image generation section that generates an image based on the operation information.

According to this embodiment, the rotation angle information about the controller around a given coordinate axis is acquired as the operation information. At least one of the moving state and the action state of the hit target is set based on the acquired rotation angle information, and an image based on the operation information is generated. This makes it possible to implement a hit calculation process that takes account of the rotation angle information about the controller, so that a novel hit calculation process can be implemented.

In the image generation system,
the hit calculation section may set at least one of the moving state and the action state of the hit target that has been hit by the hit object based on the rotation angle information about the controller at a hit timing when the hit target has been hit by the hit object.

This makes it possible to reflect the rotation angle information about the controller at the hit timing in the moving state or the action state of the hit target that has been hit by the hit object.

In the image generation system,
the operation information acquisition section may acquire third rotation angle information that is the rotation angle information around a third coordinate axis, when a coordinate axis that is set along a long axis direction of the controller is referred to as the third coordinate axis, and coordinate axes that perpendicularly intersect the third coordinate axis are referred to as a first coordinate axis and a second coordinate axis; and
the hit calculation section may set at least one of the moving state and the action state of the hit target that has been hit by the hit object based on the third rotation angle information around the third coordinate axis.

According to this configuration, when the controller has rotated around the third coordinate axis (long axis direction), the moving direction or the rotation state of the hit target changes based on the third rotation angle information around the third coordinate axis. Therefore, a novel hit calculation process can be implemented.

In the image generation system,
the operation information acquisition section may acquire acceleration information in a direction along the third coordinate axis; and
the hit calculation section may set hit force information about the hit target due to the hit object based on the acceleration information in the direction along the third coordinate axis.

According to this configuration, the moving direction and the rotation state of the hit target can be set based on the rotation angle information about the controller, and the hit force applied to the hit target due to the hit object can be set based on the acceleration information in the direction along the third coordinate axis.

In the image generation system,
the hit calculation section may set at least one of the moving state and the action state of the hit target that has been hit by the hit object based on the rotation angle information about the controller during a hit determination period.

This makes it possible to reflect the rotation angle information about the controller acquired during the hit determination period in the moving state or the action state of the hit target.

In the image generation system,
the hit calculation section may set at least one of the moving state and the action state of the hit target that has been hit by the hit object based on change information about the rotation angle information about the controller during the hit determination period.

This makes it possible to reflect a change in the rotation angle information about the controller during the hit determination period in the hit calculation process.

In the image generation system,
the operation information acquisition section may acquire third rotation angle information that is the rotation angle information around a third coordinate axis, when a coordinate axis that is set along a long axis direction of the controller is referred to as the third coordinate axis, and coordinate axes that perpendicularly intersect the third coordinate axis are referred to as a first coordinate axis and a second coordinate axis; and
the hit calculation section may set at least one of the moving state and the action state of the hit target that has been hit by the hit object based on the third rotation angle information at a first timing during the hit determination period and the third rotation angle information at a second timing during the hit determination period.

According to this configuration, the moving direction and the rotation state of the hit target are set based on the third rotation angle information at the first timing before the hit timing and the third rotation angle information at the second timing after the hit timing, so that a more intelligent and accurate hit calculation process can be implemented.

In the image generation system,
the operation information acquisition section may acquire acceleration information in a direction along the third coordinate axis; and
the hit calculation section may set hit force information about the hit target due to the hit object based on the acceleration information in the direction along the third coordinate axis at a hit timing between the first timing and the second timing.

According to this configuration, the moving direction and the rotation state of the hit target can be set based on the third rotation angle information at the first timing and he second timing, and the hit force applied to the hit target due to the hit object can be set based on the acceleration information in the direction along the third coordinate axis at the hit timing.

The image generation system may further comprise:
a reference position detection section that detects that the controller has been set to a reference position,
the sensor included in the controller may be an angular velocity sensor; and
the operation information acquisition section may acquire the rotation angle information that is set to an initial value when the controller has been set to the reference position.

Therefore, rotation angle information based on the initial value that is set at the reference position can be acquired.

In the image generation system,
the reference position detection section may determine that the controller has been set to the reference position when a player has performed a given operation that indicates that the controller has been set to the reference position using the controller.

This makes it possible to detect that the controller is set to the reference position by a simple operation performed by the player, and set the rotation angle information to the initial value.

The image generation system may further comprise:
a hit determination area setting section that sets a hit determination area for the hit target that is hit by the hit object,
the hit determination area setting section may set the hit determination area based on the rotation angle information that has been acquired by the operation information acquisition section.

According to this configuration, the hit determination area of the hit target that is hit by the hit object can be set by utilizing the acquired rotation angle information about the controller.

In the image generation system,
the operation information acquisition section may acquire first rotation angle information that is the rotation angle information around a first coordinate axis and second rotation angle information that is the rotation angle information around a second coordinate axis, when a coordinate axis that is set along a long axis direction of the controller is referred to as a third coordinate axis, and coordinate axes that perpendicularly intersect the third coordinate axis are referred to as the first coordinate axis and the second coordinate axis; and
the hit determination area setting section may set the hit determination area based on the first rotation angle information and the second rotation angle information that have been acquired by the operation information acquisition section.

According to this configuration, when the player has operated the controller so that the first rotation angle information about the controller around the first coordinate axis and the second rotation angle information about the controller around the second coordinate axis have changed, the hit determination area also changes based on the first rotation angle information and the second rotation angle information. Therefore, the hit calculation process can be performed on the hit object and the hit target using the hit determination area.

In the image generation system,
the hit object may be a possessed object that is possessed by the character or a part object that forms the character; and
the hit determination area setting section may change the size of the hit determination area based on at least one of an ability parameter and a status parameter of the character.

This makes it possible to implement a hit calculation process that takes account of the ability parameter and the status parameter of the character.

The image generation system may further comprise:
a character control section that controls the character,
the character control section may cause the character to make a motion that is determined based on the rotation angle information that has been acquired by the operation information acquisition section.

According to this configuration, the motion of the character changes based on the rotation angle information about the controller, so that a more realistic image can be generated.

In the image generation system,
the operation information acquisition section may acquire first rotation angle information that is the rotation angle information around a first coordinate axis and second rotation angle information that is the rotation angle information around a second coordinate axis, when a coordinate axis that is set along a long axis direction of the controller is referred to as a third coordinate axis, and coordinate axes that perpendicularly intersect the third coordinate axis are referred to as the first coordinate axis and the second coordinate axis; and
the character control section may cause the character to make a motion that is determined based on the first rotation angle information and the second rotation angle information that have been acquired by the operation information acquisition section.

According to this configuration, the motion of the character can be controlled by effectively utilizing the first rotation angle information about the controller around the first coordinate axis and the second rotation angle information about the controller around the second coordinate axis.

According to another embodiment of the invention, there is provided an image generation method comprising:
acquiring operation information based on sensor information from a controller that includes a sensor, rotation angle information about the controller around a given coordinate axis being acquired as the operation information;
performing a hit calculation process that sets at least one of a moving state and an action state of a hit target that has been hit by a hit object based on the acquired rotation angle information; and
generating an image based on the operation information.

According to another embodiment of the invention, there is provided computer program product storing a program code that causes a computer to execute the above image generation method.

The term "computer program product" refers to an information storage medium, a device, an instrument, a system, or the like that stores a program code, such as an information storage medium (e.g., optical disk medium (e.g., DVD), hard disk medium, and memory medium) that stores a program code, a computer that stores a program code, or an Internet system (e.g., a system including a server and a client terminal), for example. In this case, each element and each process according to the above embodiments are implemented by corresponding modules, and a program code that includes these modules is recorded in the computer program product.

Embodiments of the invention are described below. Note that the following embodiments do not in any way limit the scope of the invention laid out in the claims. Note that all elements of the following embodiments should not necessarily be taken as essential requirements of the invention.

### 1. Configuration

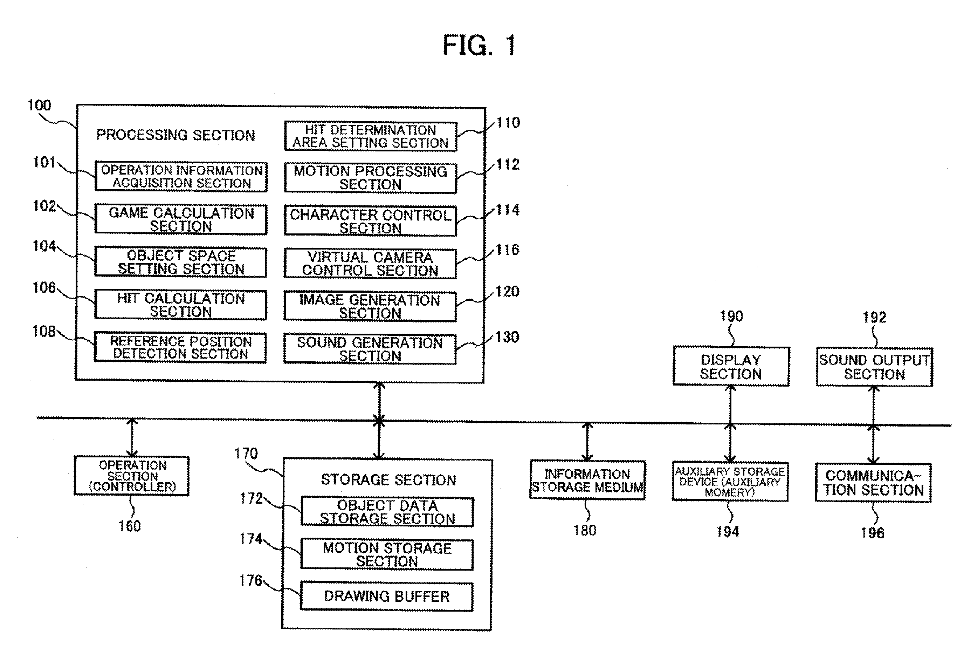

FIG. 1 shows an example of a block diagram of an image generation system (game system) according to one embodiment of the invention. Note that the image generation system according to this embodiment may have a configuration in which some of the elements (sections) shown in FIG. 1 are omitted.

An operation section 160 allows the player to input operation data. The function of the operation section 160 may be implemented by an arrow key, an operation button, an analog stick, a lever, a sensor (e.g., angular velocity sensor or acceleration sensor), a microphone, a touch panel display, or the like.

A storage section 170 serves as a work area for a processing section 100, a communication section 196, and the like. The function of the storage section 170 may be implemented by a RAM (DRAM or VRAM) or the like. A game program and game data that is necessary when executing the game program are stored in the storage section 170.

An information storage medium 180 (computer-readable medium) stores a program, data, and the like. The function of the information storage medium 180 may be implemented by an optical disk (CD or DVD), a hard disk drive (HDD), a memory (e.g., ROM), or the like. The processing section 100 performs various processes according to this embodiment based on a program (data) stored in the information storage medium 180. Specifically, a program that causes a computer (i.e., a device including an operation section, a processing section, a storage section, and an output section) to function as each section according to this embodiment (i.e., a program that causes a computer to execute the process of each section) is stored in the information storage medium 180.

A display section 190 outputs an image generated according to this embodiment. The function of the display section 190 may be implemented by an LCD, an organic EL display, a CRT, a touch panel display, a head mount display (HMD), or the like. A sound output section 192 outputs sound generated according to this embodiment. The function of the sound output section 192 may be implemented by a speaker, a headphone, or the like.

An auxiliary storage device 194 (auxiliary memory or secondary memory) is a storage device used to supplement the capacity of the storage section 170. The auxiliary storage device 194 may be implemented by a memory card such as an SD memory card or a multimedia card, or the like.

The communication section 196 communicates with the outside (e.g., another image generation system, a server, or a host device) via a cable or wireless network. The function of the communication section 196 may be implemented by hardware such as a communication ASIC or a communication processor, or communication firmware.

A program (data) that causes a computer to function as each section according to this embodiment may be distributed to the information storage medium 180 (or the storage section 170 or the auxiliary storage device 194) from an information storage medium of a server (host device) via a network and the communication section 196. Use of the information storage medium of the server (host device) is also included within the scope of the invention.

The processing section 100 (processor) performs a game process, an image generation process, a sound generation process, and the like based on operation data from the operation section 160, a program, and the like. The processing section 100 performs various processes using the storage section 170 as a work area. The function of the processing section 100 may be implemented by hardware such as a processor (e.g., CPU or GPU) or ASIC (e.g., gate array) or a program.

The processing section 100 includes an operation information acquisition section 101, a game calculation section 102, an object space setting section 104, a hit calculation section 106, a reference position detection section 108, a hit determination area setting section 110, a motion processing section 112, a character control section 114, a virtual camera control section 116, an image generation section 120, and a sound generation section 130. Note that the processing section 100 may have a configuration in which some of these sections are omitted.

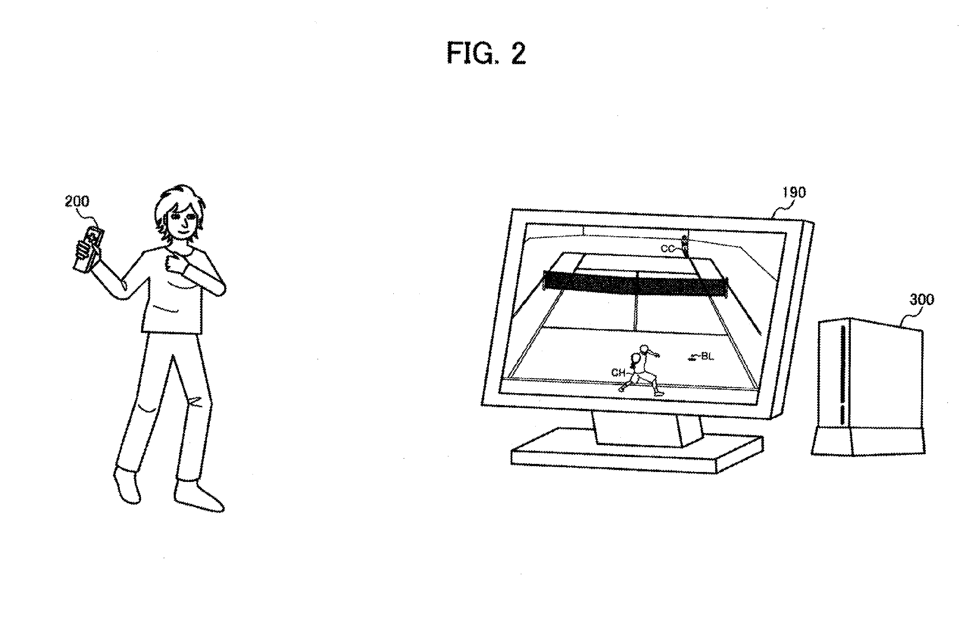

The operation information acquisition section 101 acquires operation information about an operation performed by the player using the operation section 160. In this embodiment, a controller (see FIG. 2) that includes a sensor (e.g., angular velocity sensor or acceleration sensor) as the operation section 160 is provided. The operation information acquisition section 101 acquires rotation angle information (i.e., the rotation angle or a parameter equivalent to the rotation angle) about the controller around a given coordinate axis (at least one coordinate axis) as the operation information based on sensor information (i.e., a sensor output signal or information obtained by performing a given process on the output signal) from the controller. For example, a coordinate axis that is set along the longitudinal direction (long axis direction) of the controller is referred to as a third coordinate axis, and coordinate axes that perpendicularly intersect the third coordinate axis are referred to as a first coordinate axis and a second coordinate axis. In this case, the operation information acquisition section 101 acquires third rotation angle information that is rotation angle information around the third coordinate axis. Alternatively, the operation information acquisition section 101 acquires first rotation angle information that is rotation angle information around the first coordinate axis, or second rotation angle information that is rotation angle information around the second coordinate axis. For example, the operation information acquisition section 101 acquires the first rotation angle information, the second rotation angle information, and the third rotation angle information based on sensor information from an angular velocity sensor included in the controller. When the controller includes an acceleration sensor, the operation information acquisition section 101 acquires acceleration information in the direction along the third coordinate axis, for example. Alternatively, the operation information acquisition section 101 may acquire acceleration information in the direction along the first coordinate axis, or acceleration information in the direction along the second coordinate axis.

The game calculation section 102 performs a game calculation process. The game calculation process includes starting the game when game start conditions have been satisfied, proceeding with the game, calculating the game results, and finishing the game when game finish conditions have been satisfied, for example.

The object space setting section 104 disposes an object (i.e., an object formed by a primitive surface such as a polygon, a free-form surface, or a subdivision surface) that represents a display object such as a model object (i.e., a moving object such as a human, robot, car, fighter aircraft, missile, or bullet), a map (topography), a building, a course (road), a tree, or a wall in an object space. Specifically, the object space setting section 104 determines the position and the rotation angle (synonymous with orientation or direction) of the object in a world coordinate system, and disposes the object at the determined position (X, Y, Z) and the determined rotation angle (rotation angles around X, Y, and Z axes). More specifically, an object data storage section 172 of the storage section 170 stores object data that is linked to an object number and indicates the object's position, rotation angle, moving speed, moving direction, and the like.

The hit calculation section 106 calculates a hit between a hit object and a hit target. For example, the hit calculation section 106 sets at least one of the moving state and the action (behavior) state of the hit target that has been hit by the hit object based on the rotation angle information acquired by the operation information acquisition section 101.

The term "hit object" refers to an object that is used to hit the hit target. Examples of the hit object include a possessed object (held object) that is possessed (held) by a character, a part object that forms a character, and the like. Examples of the possessed object that is possessed by a character include a racket used in tennis, table tennis, badminton, or the like, a baseball bat, a golf club, a weapon (e.g., sword), a musical instrument (e.g., maraca), a drumstick, and the like. Examples of the part object that forms a character include a hand, a foot, a head, a body, and the like. The term "hit target" refers to an object that is hit by the hit object. Examples of the hit target include a ball, a weapon possessed by another character, a stationary object (e.g., wall or floor), the hand, foot, head, or body of another character, and the like.

Examples of the moving state of the hit target that has been hit by the hit object include the moving direction, moving speed, or moving acceleration of the hit target that has been hit by the hit object, and the like. Examples of the action state of the hit target that has been hit by the hit object include the rotation state or the motion state of the hit target that has been hit by the hit object, and the like. Examples of the rotation state include the rotation direction, rotation speed (angular velocity), or rotation acceleration (angular acceleration) of the hit target, and the like. Examples of the motion state include various states of the hit target when causing the hit target to make a motion based on motion data or the like.

The hit calculation section 106 sets at least one of the moving state and the action state of the hit target that has been hit by the hit object based on the rotation angle information about the controller at the hit timing when the hit target has been hit by the hit object. For example, when the operation information acquisition section 101 has acquired the third rotation angle information around the third coordinate axis, the hit calculation section 106 sets at least one of the moving direction (moving state in a broad sense) and the rotation state (action state in a broad sense) of the hit target that has been hit by the hit object based on the acquired third rotation angle information. When the operation information acquisition section 101 has acquired the acceleration information (centrifugal force information) in the direction along the third coordinate axis, the hit calculation section 106 sets hit force information (hit acceleration) about the hit target due to the hit object based on the acquired acceleration information.

The hit calculation section 106 may set at least one of the moving state and the action state of the hit target based on the rotation angle information about the controller during a hit determination period. Note that the hit determination period refers to a period that includes the hit timing. For example, the hit calculation section 106 sets the moving state and the action state of the hit target based on change information about the rotation angle information during the hit determination period. For example, when the operation information acquisition section 101 has acquired the third rotation angle information around the third coordinate axis, the hit calculation section 106 sets the moving direction and the rotation state of the hit target based on the third rotation angle information around the third coordinate axis at a first timing (timing before the hit timing) in the hit determination period, and the third rotation angle information around the third coordinate axis at a second timing (timing after the hit timing) in the hit determination period. When the operation information acquisition section 101 has acquired the acceleration information in the direction along the third coordinate axis, the hit calculation section 106 sets the hit force information about the hit target due to the hit object based on the acceleration information in the direction along the third coordinate axis at the hit timing between the first timing and the second timing.

The reference position detection section 108 detects that the controller has been set to a reference position. For example, the reference position detection section 108 determines that the controller has been set to the reference position when the player has performed a given operation (e.g., pressed a button) that indicates that the controller has been set to the reference position using the controller. When the sensor included in the controller is an angular velocity sensor, for example, the operation information acquisition section 101 acquires the rotation angle information that is set to an initial value (e.g., 0°) when the controller has been set to the reference position. The term "reference position" used herein refers to a position for setting the rotation angle information about the controller around the first, second, or third coordinate axis to the initial value (reference value), for example.

The hit determination area setting section 110 sets a hit determination area (hit volume) for the hit target that is hit by the hit object. For example, the hit determination area setting section 110 sets the hit determination area based on the rotation angle information acquired by the operation information acquisition section 101. The term "hit determination area" refers to an area (volume) used to determine whether or not the hit target has been hit by the hit object. For example, the hit determination area includes (part or the entirety of) the hit object. When the operation information acquisition section 101 has acquired the first rotation angle information about the controller around the first coordinate axis and the second rotation angle information about the controller around the second coordinate axis, the hit determination area setting section 110 sets the hit determination area based on the acquired first rotation angle information and second rotation angle information. For example, the hit determination area setting section 110 sets the position, direction, and the like of the hit determination area in the object space. When the operation information acquisition section 101 has acquired the third rotation angle information around the third coordinate axis in addition to the first rotation angle information and the second rotation angle information, the hit determination area setting section 110 may set the hit determination area based on the first rotation angle information, the second rotation angle information, and the third rotation angle information.

When the hit object is the possessed object or the part object of the character, the hit determination area setting section 110 may change the size (volume or area) of the hit determination area based on at least one of an ability parameter and a status parameter of the character. For example, the hit determination area setting section 110 increases the size of the hit determination area when the ability parameter of the character is high, or the status of the character is good. The hit determination area setting section 110 may change the size of the hit determination area based on the level (inexperienced or experienced) of the player. The ability parameter indicates the ability (e.g., speed, power, attack capability, defense capability, and stability) of the character set in the game, and the status parameter indicates the current status (state) (e.g., strength, condition, and degree of fatigue) of the player.

The motion processing section 112 performs a motion process that causes the character (model object) to make a motion. For example, the motion processing section 112 performs a motion generation process or a motion reproduction process based on a motion (motion data) stored in a motion data storage section 174. Specifically, the motion storage section 174 stores a plurality of reference motions (reference motion data). The motion processing section 112 blends the reference motions to generate a motion of the character.

More specifically, the motion storage section 174 stores a plurality of first height reference motions that are reference motions when the possessed object (e.g., racket, club, or bat) or the part object (e.g., foot or hand) of the character is positioned at a first height. The motion storage section 174 also stores at least one second height reference motion that is a reference motion when the possessed object or the part object is positioned at a second height. The motion processing section 112 blends a plurality of first height reference motions and at least one second height reference motion to generate a motion of the character.

The character control section 114 controls the character. The character is a moving object (e.g., human, robot, or animal) that appears in the game. Specifically, the character control section 114 performs calculations for moving the character (model object). The character control section 114 also performs calculations for causing the character to make a motion. Specifically, the character control section 114 causes the character to move in the object space or causes the character to make a motion (animation) based on the operation information acquired by the operation information acquisition section 101, a program (movement/motion algorithm), various types of data (motion data), and the like. More specifically, the character control section 114 performs a simulation process that sequentially calculates movement information (position, rotation angle, speed, or acceleration) and motion information (position or rotation angle of a part object) about the character every frame (1/60th of a second). The term "frame" refers to a time unit used when performing the movement/motion process (simulation process) or the image generation process.

In this embodiment, the character control section 114 causes the character to make a motion that is calculated based on the rotation angle information acquired by the operation information acquisition section 101. For example, when the operation information acquisition section 101 has acquired the first rotation angle information about the controller around the first coordinate axis and the second rotation angle information about the controller around the second coordinate axis, the character control section 114 causes the character to make a motion that is calculated based on the acquired first rotation angle information and second rotation angle information. When the motion processing section 112 has belended the reference motions based on the first rotation angle information and the second rotation angle information to generate a motion of the character, the character control section 114 causes the character to make the generated motion. For example, the character control section 114 causes the character to make a motion by moving each part object (bone) of the character (skeleton) using the motion data that includes the position or the rotation angle (direction) of each part object (bone) that forms the character (skeleton). When the operation information acquisition section 101 has acquired the third rotation angle information around the third coordinate axis in addition to the first rotation angle information and the second rotation angle information, the character control section 114 may cause the character to make a motion that is calculated based on the first rotation angle information, the second rotation angle information, and the third rotation angle information.

The virtual camera control section 116 controls a virtual camera (viewpoint) for generating an image viewed from a given (arbitrary) viewpoint in the object space. Specifically, the virtual camera control section 116 controls the position (X, Y, Z) or the rotation angle (rotation angles around X, Y, and Z axes) of the virtual camera (i.e., controls the viewpoint position, the line-of-sight direction, or the angle of view).

The image generation section 120 performs a drawing process based on the results of various processes (game process and simulation process) performed by the processing section 100 to generate an image, and outputs the generated image to the display section 190. Specifically, the image generation section 120 performs a geometric process (e.g., coordinate transformation (world coordinate transformation and camera coordinate transformation), clipping, perspective transformation, or light source process), and generates drawing data (e.g., vertex position coordinates of the primitive surface, texture coordinates, color data, normal vector, or α-value) based on the geometric process results. The image generation section 120 draws the object (one or more primitive surfaces) subjected to perspective transformation in a drawing buffer 176 (i.e., a buffer (e.g., frame buffer or work buffer) that can store image information corresponding to each pixel) based on the drawing data (primitive surface data). The image generation section 120 thus generates an image viewed from the virtual camera (given viewpoint) in the object space. The drawing process may be implemented by a vertex shader process or a pixel shader process.

In this embodiment, the image generation section 120 generates an image based on the operation information (hit calculation results). For example, the image generation section 120 generates an image in which the character makes a motion, or an image in which the hit target moves.

The sound generation section 130 performs a sound process based on the results of various processes performed by the processing section 100 to generate game sound (e.g., background music (BGM), effect sound, or voice), and outputs the generated game sound to the sound output section 192.

### 2. Method according to this embodiment

### 2.1 Hit calculation process based on rotation angle information about controller

In this embodiment, as shown in FIG. 2, the player holds a controller (game controller) 200 with one hand, and swings the controller 200 as if to swing a tennis racket. A character CH that is operated by the player is displayed on the display section 190 that displays an image generated by a game device (image generation system) 300. When the player has swung the controller 200, the character CH displayed on the screen swings the racket in the same manner as the player. For example, when the player has played a flat shot, the character CH also plays a flat shot. When the player has played a topspin or slice shot, the character CH also plays a topspin or slice shot. The player enjoys a tennis game by thus causing the character CH displayed on the screen to hit back a ball BL hit by an opposing character CC.

The following description is given mainly taking an example of applying this embodiment to a tennis game. When applying this embodiment to a tennis game, the hit object is a racket, and the hit target is a ball. Note that this embodiment may also be applied to a sports game (e.g., table tennis, badminton, baseball, soccer, or volleyball) other than a tennis game, or a game (e.g., fighting game, battle game, or role-playing game) other than a sports game.

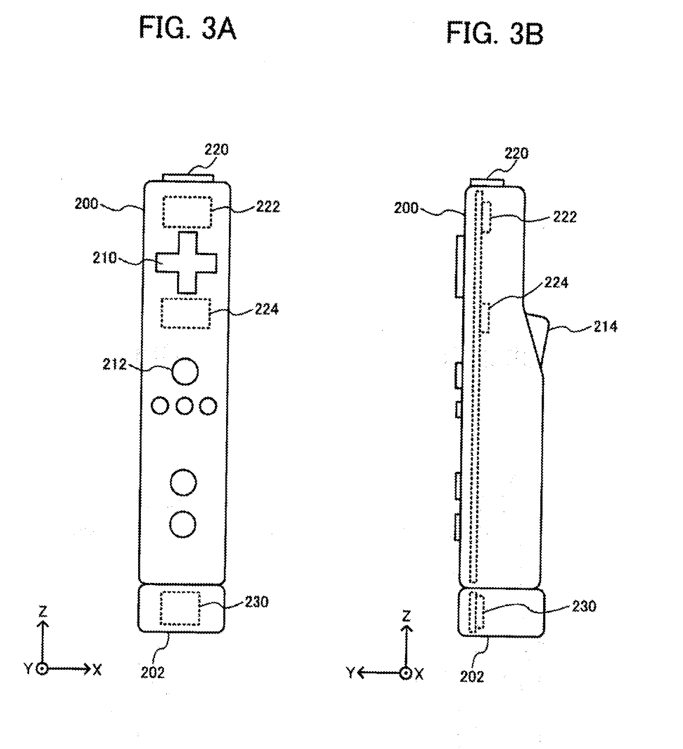

FIGS. 3A and 3B show a configuration example of the controller 200. FIG. 3A is a front view of the controller 200, and FIG. 3B is a right side view of the controller 200. The game controller 200 is formed in the shape of a chamfered stick having an approximately rectangular cross section. The player holds and operates the game controller 200 with one hand as if to hold a stick.

Various switches (input devices) such as an arrow key 210 and a A-button 212 are provided on the front side (operation side) of the controller 200. A trigger button 214 is provided on the rear side (back side) of the controller 200.

The controller 200 includes an imaging element 220, a wireless communication module 222, an acceleration sensor 224, and an angular velocity sensor 230. The controller 200 also includes a controller control section, a vibrator (vibration mechanism), a speaker, and the like (not shown). The controller control section includes a control IC (CPU or ASIC) and a memory. The controller control section controls the entire controller 200, and performs various processes. The vibrator produces vibrations based on a vibration control signal from the controller control section so that the vibrations are applied to the hand of the player that holds the controller 200. The speaker outputs sound based on a sound signal output from the controller control section.

The imaging element 220 is implemented by a CCD, a CMOS sensor, or the like. The imaging element 220 images a view in front of the controller 200 in the longitudinal direction (long axis direction).

The wireless communication module 222 communicates with the game device (game device main body) 300 shown in FIG. 2 via wireless communication (short-range wireless communication). For example, operation information input using the arrow key 210, the A-button 212, and the like, imaging information obtained by the imaging element 220, and sensor information (acceleration information and angular velocity information) obtained by the acceleration sensor 224 and the angular velocity sensor 230 are transmitted to the game device 300 through the wireless communication module 222 via wireless communication.

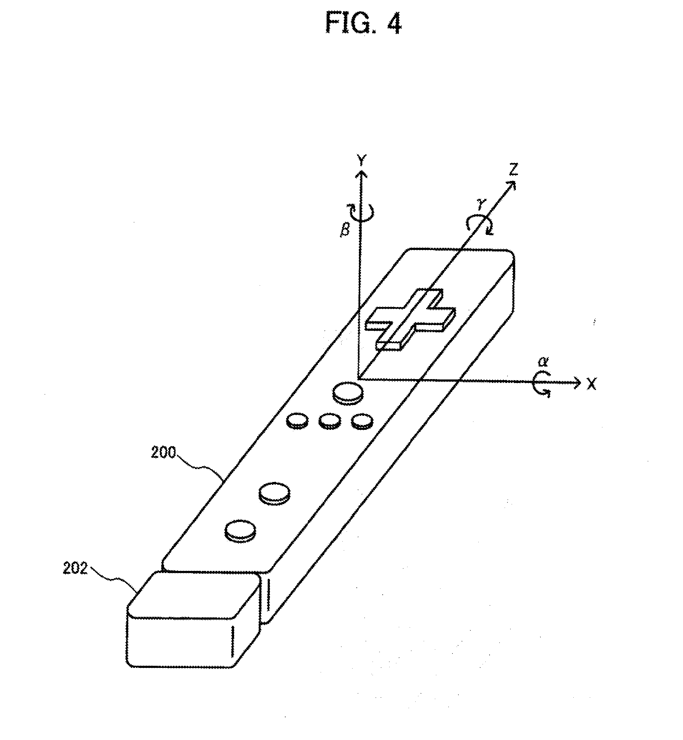

The acceleration sensor 224 detects acceleration information when the user has moved (swung) the controller 200. For example, the acceleration sensor 224 detects the acceleration information in three orthogonal axial directions. As shown in FIG. 4, the coordinate axis that is set along the long side direction of the controller 200 is referred to as a Z-axis (third coordinate axis in a broad sense), and the coordinate axes that perpendicularly intersect the Z-axis are referred to as an X-axis and a Y-axis (first coordinate axis and second coordinate axis in a broad sense), for example. In this case, the acceleration sensor 224 detects first acceleration information along the X-axis direction, second acceleration information along the Y-axis direction, and third acceleration information along the Z axis direction, and outputs the first acceleration information, the second acceleration information, and the third acceleration information as the sensor information, for example.

The angular velocity sensor 230 detects angular velocity information when the user has moved (rotated) the controller 200. For example, the angular velocity sensor 230 detects the angular velocity information around three orthogonal axes (i.e., detects the angular velocity information about the controller 200 around the X-axis, Y-axis, and Z-axis). As shown in FIG. 4, when the rotation angle around the X-axis is referred to as α, the rotation angle around the Y-axis is referred to as β, and the rotation angle around the Z-axis is referred to as γ, the angular velocity sensor 230 detects the angular velocities relating to the rotation angles α, β, and γ. Note that the positive/negative direction of the coordinate axes X, Y, and Z and the rotation direction of the rotation angles α, β, and γ are not limited to those shown in FIG. 4, but may be appropriately set. The angular velocity sensor 230 may be implemented by a multi-axis angular velocity sensing gyroscope or the like. For example, the angular velocity sensor 230 may be implemented by a multi-axis angular velocity sensing gyroscope having a MEMS structure.

The angular velocity sensor 230 is provided in an extension unit 202 that is connected to an extension terminal of the controller 200. Note that the angular velocity sensor 230 may be provided in the controller 200. The following description is given on the assumption that the controller main body and the extension unit are integrally formed for convenience.

It is desirable that the controller 200 have a shape that allows the player to hold (grip) the controller 200 and the controller 200 to be rotated around the coordinate axis along the longitudinal direction, for example. Note that the shape of the controller 200 is not limited to the shape (approximately rectangular parallelepiped shape (i.e., the cross section along the longitudinal direction has an approximately rectangular shape) shown in FIGS. 3A and 3B. Various modifications may be made, such as changing part of the shape shown in FIGS. 3A and 3B, or providing a case that receives the controller 200.

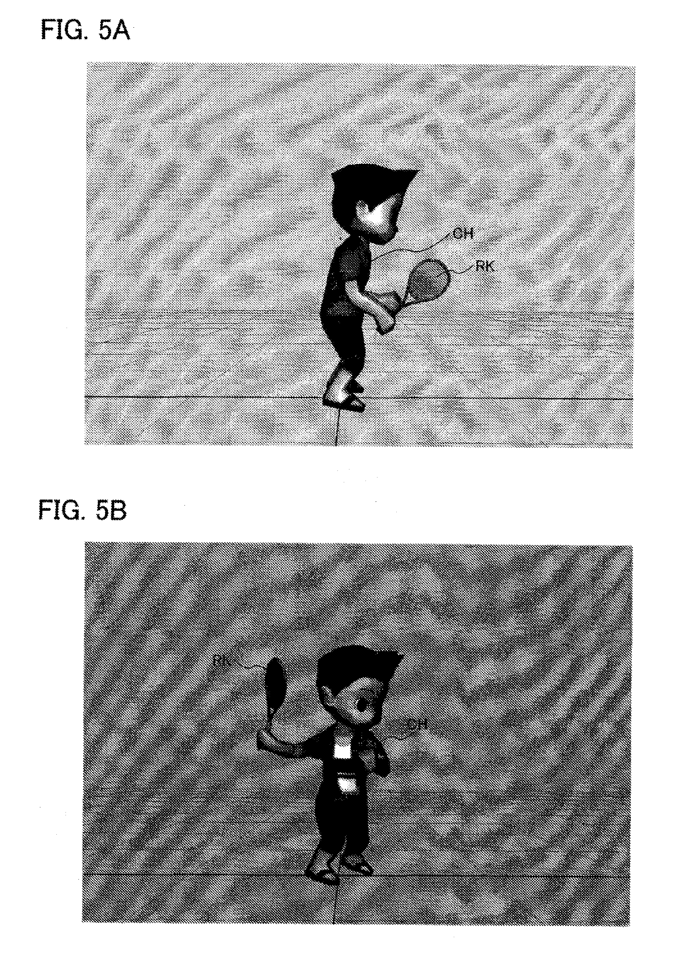

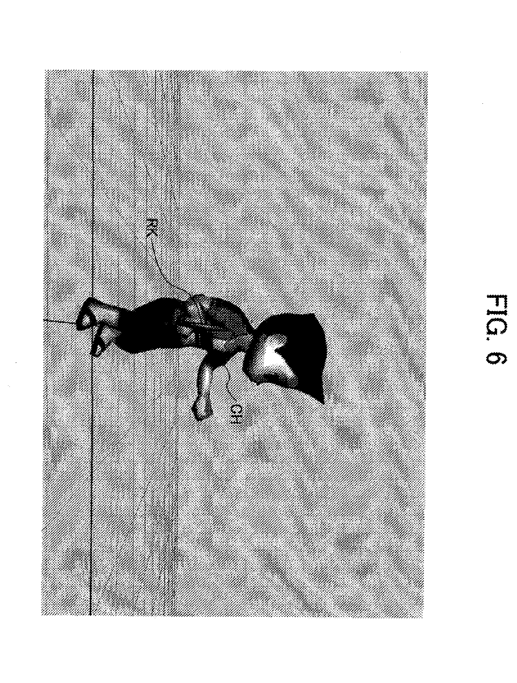

FIGS. 5A, 5B, and 6 show examples of the motion (reference motion) of the character CH that is operated using the controller 200. FIG. 5A show an example of the motion (posture) of the character CH at the reference position. FIG. 5B shows an example of the swing-back motion of the character CH, and FIG. 6 shows an example of the motion of the character CH when hitting a ball (moment of impact). When the player holds the controller 200 and swings the controller 200 as if to swing a tennis racket (see FIG. 2), the character CH displayed on the screen swings the racket as shown in FIGS. 5A to 6. In FIGS. 5A to 6, the character CH plays a flat shot. Specifically, since the side of a racket RK (hit object in a broad sense) is perpendicular to the horizontal plane (ground) when the ball (hit target in a broad sense) is hit by the racket RK (see FIG. 6) so that the ball is hit by the side of the racket perpendicularly, the ball travels along a flat-shot path without rotating.

A tennis player plays various shots such a topspin shot and a slice shot in addition to the flat shot shown in FIG. 6. For example, when playing a topspin shot, the side of the racket faces downward (i.e., the angle formed by the side of the racket and the horizontal plane is less than 90°) when the ball is hit by the racket, as compared with the flat shot shown in FIG. 6, so that the ball is rotated in the forward direction. When playing a slice shot, the side of the racket faces upward (i.e., the angle formed by the side of the racket and the horizontal plane is more than 90°) when the ball is hit by the racket, as compared with the flat shot shown in FIG. 6, so that the ball is rotated in the reverse direction.

However, a related-art tennis game cannot allow the player to play various shots such a topspin shot and a slice shot by performing a reasonable operation. For example, a method that allows the player to selectively play a topspin shot or a slice shot by operating an arrow key or a button may be considered. Specifically, the player may play a topspin shot by operating the lower area of the arrow key, and play a slice shot by operating the upper area of the arrow key. However, since such an operation differs from a swing operation in tennis, it is difficult for the player to experience virtual reality that the player actually plays tennis.

In particular, when the player swings the controller 200 as if to swing a tennis racket so that the character CH displayed on the screen hits the ball BL back (see FIG. 2), the player cannot fully experience virtual reality when selectively playing a shot by operating the arrow key or the like. Specifically, the player swings the controller 200 as if to actually play tennis, but cannot selectively play a topspin shot or a slice shot in the same way as in actual tennis. This impairs the advantages achieved by the game operation shown in FIG. 2.

In this embodiment, the rotation angle information about the controller 200 around a given coordinate axis (e.g., Z-axis (third coordinate axis)) is acquired. The moving state and the action state (moving direction and rotation state) of the ball BL (hit target in a broad sense) that is hit by the racket RK (hit object in a broad sense) are set based on the acquired rotation angle information (hit calculation process).

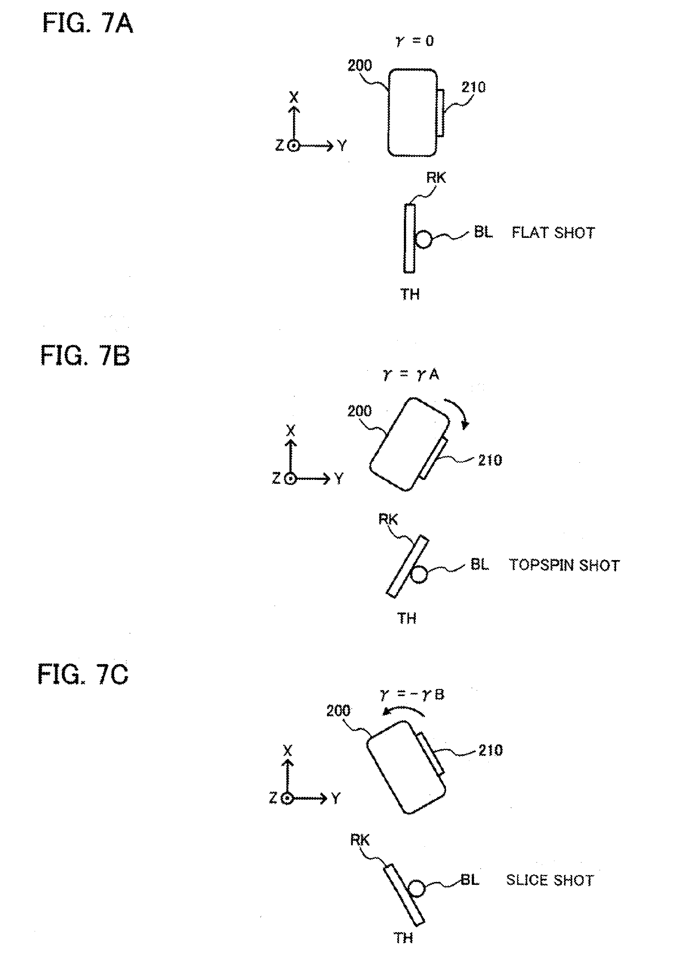

In FIGS. 7A to 7C, the moving state and the action state of the ball BL are set based on the rotation angle information about the controller 200 at a timing (hit timing) when the ball BL is hit by the racket RK, for example.

In FIG. 7A, the rotation angle γ of the controller 200 around the Z-axis at a hit timing TH is 0 when the initial value of the rotation angle γ at the reference position is 0 (°), for example. When the rotation angle γ around the Z-axis at the hit timing TH is 0, it is determined that the side of the racket RK is perpendicular to the horizontal plane, and the moving direction, the rotation state, and the like of the ball BL are set so that a flat shot occurs, for example. Specifically, the movement of the ball BL is calculated so that the ball BL travels along a flat-shot path at a relatively high speed and almost no rotation occurs.

In FIG. 7B, the rotation angle γ of the controller 200 at the hit timing TH is γA. Therefore, it is determined that the angle formed by the side of the racket and the horizontal plane is less than 90° (i.e., the side of the racket RK faces downward), and the moving direction, the rotation state, and the like of the ball BL are set so that a topspin shot occurs, for example. Specifically, the movement of the ball BL is calculated so that the ball BL travels along a topspin-shot path while rotating in the forward direction.

In FIG. 7C, the rotation angle γ of the controller 200 at the hit timing TH is -γB. Therefore, it is determined that the angle formed by the side of the racket and the horizontal plane is greater than 90° (i.e., the side of the racket RK faces upward), and the moving direction, the rotation state, and the like of the ball BL are set so that a slice shot occurs, for example. Specifically, the movement of the ball BL is calculated so that the ball BL travels along a slice-shot path while rotating in the reverse direction.

The shots shown in FIGS. 7A to C may be determined by determining the angular range of the rotation angle γ, for example. It is determined that a flat shot occurs when -γ1<γ<γ1, it is determined that a topspin shot occurs when γ1<γ<γ2, and it is determined that a slice shot occurs when -γ2<γ<-γ1, for example.

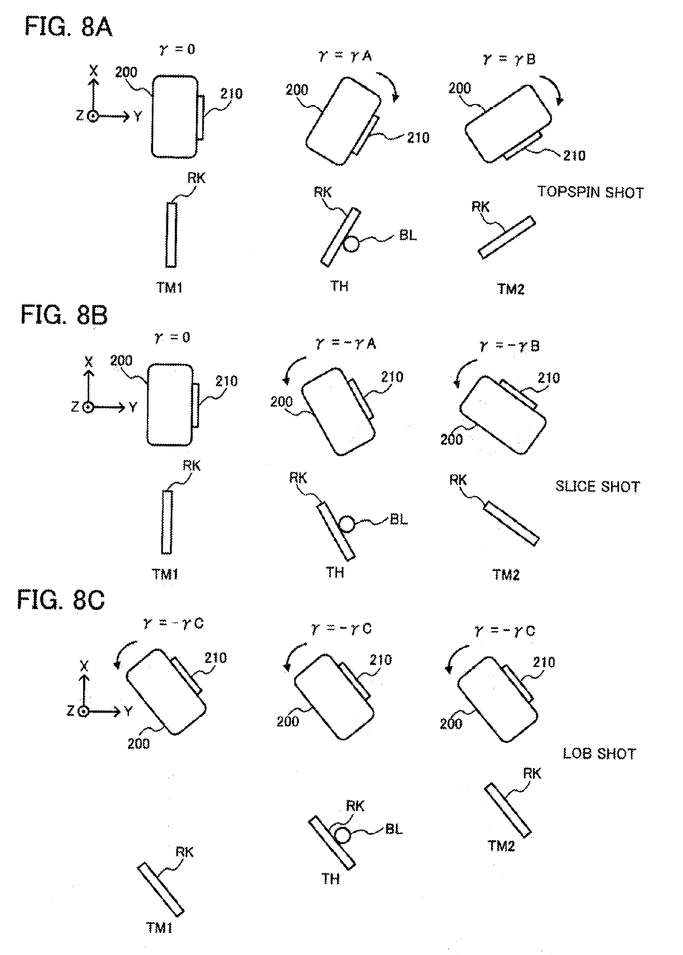

In FIGS. 8A to 8C, the moving state and the action state of the ball BL that has been hit by the racket RK are set based on the rotation angle information about the controller 200 during the hit determination period. Specifically, the moving state and the action state of the ball BL that has been hit by the racket RK are set based on the change information about the rotation angle information during the hit determination period. For example, the moving state and the action state of the ball BL are set based on the rotation angle information at the first timing and the rotation angle information at the second timing.

In FIG. 8A, the rotation angle γ around the Z-axis at a first timing TM1 before the hit timing TH is 0. Therefore, it is determined that the side of the racket is perpendicular to the horizontal plane, for example. The rotation angle γ at the hit timing TH is γA. Therefore, it is determined that the side of the racket faces downward as compared with the timing TM 1. The rotation angle γ at a second timing TM2 after the hit timing TH is γB (>γA). Therefore, it is determined that the side of the racket faces further downward as compared with the hit timing TH. When the direction of the side of the racket has changed downward across the hit timing as shown in FIG. 8A, the moving direction, the rotation state, and the like of the ball BL are set so that a topspin shot occurs, for example. When the rotation angle has changed to a large extent across the hit timing, the topspin speed (amount of rotation) may be increased, for example.

In FIG. 8B, the rotation angle γ around the Z-axis at the first timing TM1 before the hit timing TH is 0. Therefore, it is determined that the side of the racket is perpendicular to the horizontal plane. The rotation angle γ at the hit timing TH is -γA. Therefore, it is determined that the side of the racket faces upward as compared with the timing TM 1. The rotation angle γ at the second timing TM2 after the hit timing TH is -γB (<-γA). Therefore, it is determined that the side of the racket faces further upward as compared with the hit timing TH. When the direction of the side of the racket has changed upward across the hit timing as shown in FIG. 8B, the moving direction, the rotation state, and the like of the ball BL are set so that a slice shot occurs, for example. When the rotation angle has changed to a large extent across the hit timing, the slice speed (amount of rotation) may be increased, for example.

In FIG. 8C, it is determined that the side of the racket faces upward at the timings TM1, TH, and TM2. It is determined that the position of the racket RK gradually moves upward based on the rotation angle β around the Y-axis, for example. In this case, the moving direction, the rotation state, and the like of the ball BL are set so that a lob shot (i.e., the ball BL travels upward) occurs.

Specifically, while only the rotation angle at the hit timing TH is used in FIGS. 7A to 7C, the moving direction, the rotation state, and the like of the ball BL are set in FIGS. 8A to 8C taking account of the rotation angles at the timings TM1 and TM2 before and after the hit timing TH. This makes it possible to cause the ball BL that has been hit by the racket RK to travel along a realistic path so that the player can more fully experience virtual reality. Moreover, since the rotation angles of the controller at the timings before and after the hit timing are taken into account in addition to the rotation angle at the hit timing, it is possible to implement a shot that reflects the angle of the side of the racket during a follow-through or swing-back.

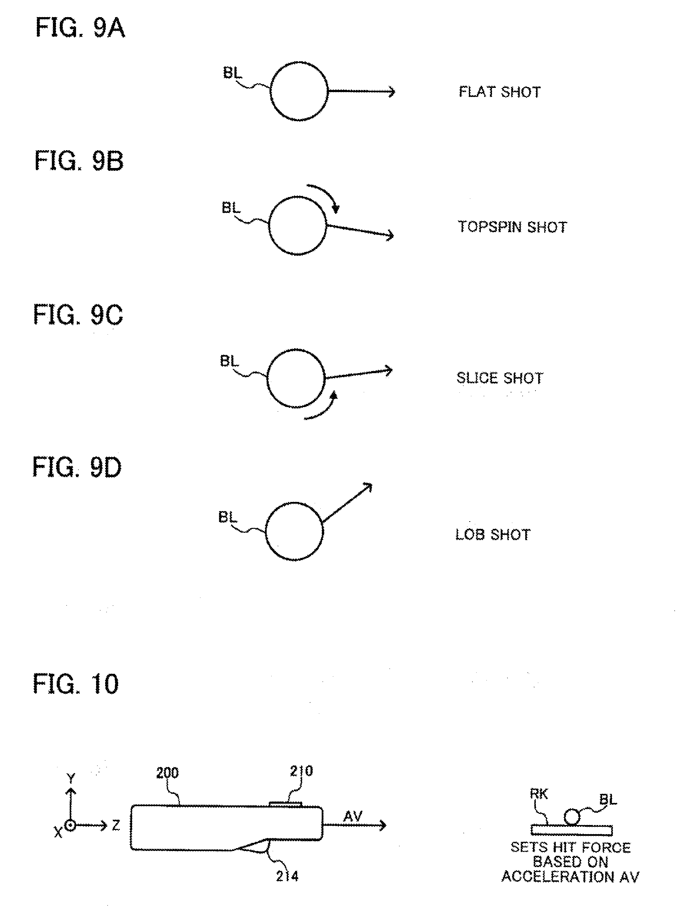

FIGS. 9A to 9D show setting examples of the rotation direction and the moving direction corresponding to a flat shot, a topspin shot, a slice shot, and a lob shot. As shown in FIGS. 9A to 9D, the ball BL travels so that almost no rotation occurs when causing a flat shot or a lob shot to occur. The ball BL rotates in the forward direction when causing a topspin shot to occur. The ball BL rotates in the reverse direction when causing a slice shot to occur. The ball BL travels horizontally when causing a flat shot to occur, and travels upward when causing a lob shot to occur. Note that the rotation direction and the moving direction of the ball BL are not limited to those shown in FIGS. 9A to 9D. Various modifications may be made. For example, a topspin lob shot (i.e., the ball BL travels upward while rotating in the forward direction) may be implemented. The shot path of the ball BL that has been hit by the racket RK may be calculated by performing a physical simulation process based on the moving state and the action state that are set when the ball BL has been hit by the racket RK, or may be obtained by selecting a shot path corresponding to the moving state and the action state that are set when the ball BL has been hit by the racket RK from a plurality of shot paths. It is desirable to set the path of the ball BL that has rebounded from the ground (field) corresponding to the type of shot. Specifically, the path of the ball BL that has rebounded from the ground is set taking account of the rotation state (e.g., rotation direction and rotation speed) when the ball BL has been hit by the racket RK. For example, when causing a topspin shot to occur, the path of the ball BL is set so that the ball BL that has rebounded from the ground leaps up. When causing a flat shot to occur, the path of the ball BL is set so that the ball BL bounds from the ground at an identical angle. When causing a slice shot to occur, the path of the ball BL is set so that the ball BL bounds from the ground at a low angle, for example.

According to this embodiment, the hit calculation process is performed using the rotation angle information about the controller 200 around a given coordinate axis. This makes it possible to control the side of a tennis racket by rotating the controller 200 around a given coordinate axis, for example. Therefore, an operation interface environment that has been difficult to implement in a related-art sports game or the like can be provided. Moreover, since the operation of the controller 200 matches the movement (action) of the character, the player can fully experience virtual reality.

For example, a related-art method detects that the player has swung the controller 200 using the acceleration sensor 224 included in the controller 200. However, when using only the acceleration sensor 224, it is difficult to accurately determine the absolute rotation angle around each coordinate axis. Moreover, it is difficult to determine the rotation angle of the controller 200 around the Z-axis along the longitudinal direction using the acceleration sensor 224.

According to this embodiment, the rotation angle of the controller 200 around each coordinate axis is determined using the angular velocity sensor 230, and the hit calculation process is implemented using the determined rotation angle. This makes it possible to implement an intelligent and accurate hit calculation process as compared with the method that uses only the acceleration sensor 224. Note that a sensor other than the angular velocity sensor 230 may be used as the sensor that determines the rotation angle of the controller 200 around each coordinate axis.

### 2.2 Hit force setting method

In this embodiment, the rotation angle of the controller 200 around a given coordinate axis is determined using the angular velocity sensor 230 of the controller 200, and the hit calculation process is performed using the rotation angle. In this case, the hit force (hit acceleration) of the ball BL may be set using the acceleration obtained by the acceleration sensor 224, for example.

As shown in FIG. 10, an acceleration AV in the direction along the Z-axis (direction along the third coordinate axis) is detected using the acceleration sensor 224. The acceleration AV corresponds to the centrifugal force (resultant force of centrifugal force and gravity) that occurs in the Z-axis direction when swinging the controller 200. The hit force when the ball BL is hit by the racket RK is set based on the detected acceleration AV.

For example, the acceleration AV that corresponds to the centrifugal force in the Z-axis direction increases when the player swings the controller 200 at a high speed. In this case, the hit force is set so that the ball BL is strongly hit by the racket RK. For example, the acceleration in the hit direction of the ball BL is increased. On the other hand, the acceleration AV that corresponds to the centrifugal force in the Z-axis direction decreases when the player swings the controller 200 at a low speed. In this case, the hit force is set so that the ball BL is weakly hit by the racket RK. For example, the acceleration in the hit direction of the ball BL is decreased.

Therefore, since the swing speed is proportional to the hit force, a shot of the ball BL can be reproduced more realistically and accurately. Specifically, the hit calculation process on the ball BL that is hit by the racket RK can be implemented by appropriately utilizing the angular velocity sensor 230 and the acceleration sensor 224. Note that the hit force of the ball BL may be set while also taking account of the rotation speed around the X-axis or the like. For example, the hit force of the ball BL is increased when the rotation speed around the X-axis is high.

The swing speed (motion speed) when the character swings the racket RK (possessed object or part object) may be set based on the acceleration AV For example, the character is caused to swing the racket RK at a high speed when the acceleration AV is high, and is caused to swing the racket RK at a low speed when the acceleration AV is low. This makes it possible to generate a more realistic image.

### 2.3 Reference position

The angular velocity information is obtained from the sensor when using the angular velocity sensor 230. Therefore, since an angular velocity integration process or the like is performed when calculating the absolute rotation angle, it is desirable to set the initial value of the rotation angle. In this embodiment, the reference position detection section 108 detects the reference position of the controller 200. The reference position is a position for setting the initial values of the rotation angles α, β, and γ of the controller 200 around the X-axis, Y-axis, and Z-axis, for example.

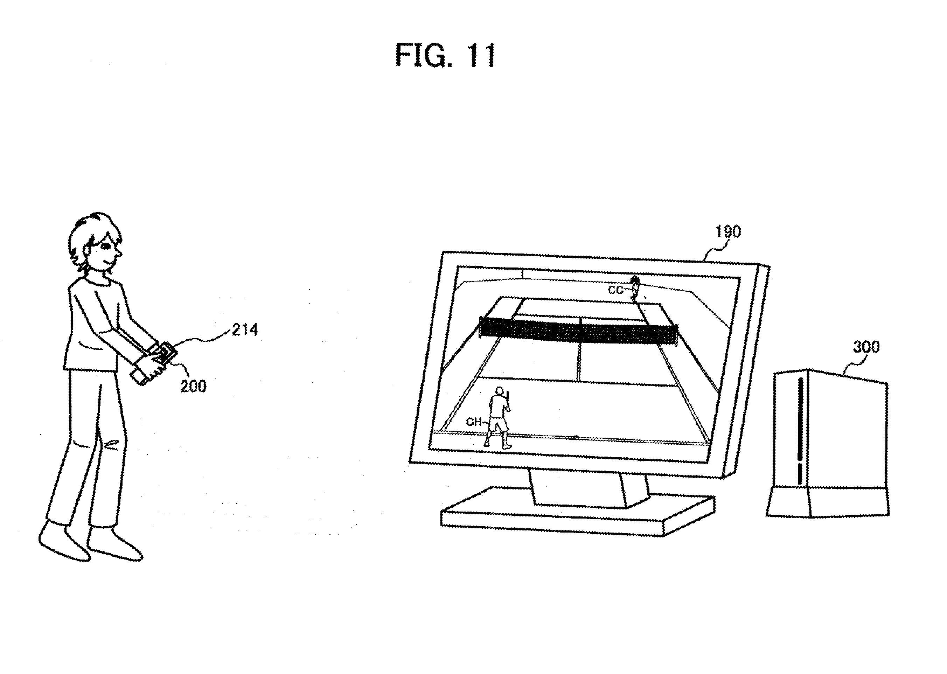

The reference position may be detected by various methods. In this embodiment, it is detected that the controller 200 has been set to the reference position when the player has performed a given operation that indicates that the controller 200 has been set to the reference position. In FIG. 11, the player is in a tennis reference position while holding the controller 200 (racket) in front of the body. The player notifies the game device 300 that the controller 200 has been set to the reference position by pressing the trigger button 214. The rotation angles α, β, and γ of the controller 200 are then set to the initial values (e.g., 0°). When the player has swung the controller 200 as if to swing a racket, the rotation angles α, β, and γ change from the initial values based on the angular velocity detected by the angular velocity sensor 230 so that the rotation angles with respect to the reference position are acquired. The player swings the controller 200 as shown in FIGS. 5A to 6 to hit the ball BL.

This allows the player to enjoy a rally with the opposing character CC by repeating the operation of holding the controller 200 (racket) in front of the body, pressing the trigger button 214, and swinging the controller 200. Therefore, the player can enjoy the tennis game by performing a comfortable operation.

Note that the reference position detection method is not limited to the method shown in FIG. 11. For example, the player may notify the game device 300 that the controller 200 has been set to the reference position by pressing a button other than the trigger button 214, or the like. Alternatively, the reference position may be detected by detecting a light-emitting element or the like provided in the display section 190 using the imaging element 220 shown in FIG. 3A. For example, the reference position is detected when the player has aimed the imaging element 220 at the screen of the display section 190.

### 2.4 Hit determination area setting method

In this embodiment, the angle on the side of the racket RK is set based on the rotation angle γ of the controller 200 obtained by the angular velocity sensor 230. The hit determination area may be set based on the rotation angles α, β, etc. of the controller 200 obtained by the angular velocity sensor 230.

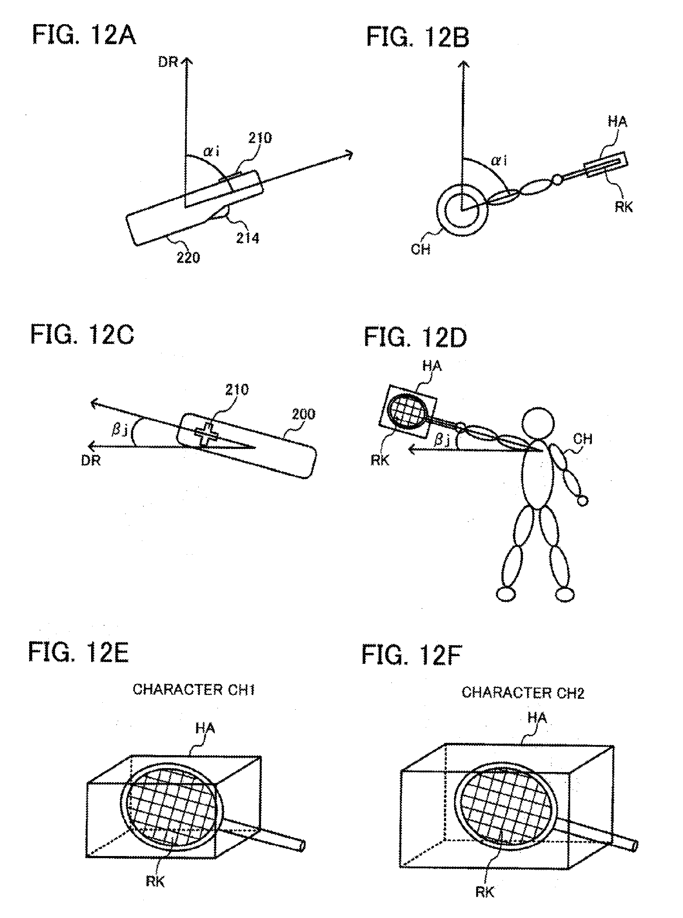

In FIG. 12A, the controller 200 is rotated around the X-axis by α=αi with respect to a reference direction DR (direction at the reference position), for example. In this case, a hit determination area HA is also rotated by α=αi with respect to the reference direction, as shown in FIG. 12B. For example, the hit determination area HA (hit volume) including the racket RK (side of the racket) is set on the assumption that the racket RK is situated at a given radius position from the center of the character CH. Whether or not the ball BL has been hit by the racket RK is determined by performing a hit check process on the hit determination area HA and the ball BL.

In FIG. 12C, the controller 200 is rotated around the Y-axis by β=βj with respect to the reference direction DR. In this case, the hit determination area HA is also rotated by β=βj with respect to the reference direction, as shown in FIG. 12D.

Therefore, when the player has swung the controller 200 as if to swing a racket, the racket RK is disposed at a position corresponding to each position of the controller 200, and the hit check process is performed on the ball BL and the hit determination area HA that includes the racket RK. Therefore, the player can hit the ball BL by swinging the controller 200 as if to swing a tennis racket, so that a realistic tennis game can be implemented.

Note that the rotation angle γ around the Z-axis may be taken into account when setting the hit determination area HA. For example, when the hit determination area HA is in the shape of a sheet, the angle of the side of the sheet may be set to the rotation angle γ around the Z-axis.

The size of the hit determination area HA may be changed based on the ability parameter or the status parameter of the character. In FIG. 12E, since a character CH1 has a small ability parameter, the size of the hit determination area HA set to the racket RK (side of the racket) is small. Therefore, the ball BL is not easily hit when the character CH1 swings the racket RK, so that the low ability of the character CH1 can be reflected in the game results.

In FIG. 12F, since a character CH2 has a large ability parameter, the size of the hit determination area HA is large. Therefore, the ball BL is easily hit when the character CH2 swings the racket RK as compared with the character CH1, so that the high ability of the character CH2 can be reflected in the game results.

Note that the size of the hit determination area HA may be changed based on the status parameter that indicates the current condition of the character. Alternatively, the size of the hit determination area HA may be changed based on the difficulty level that is set when playing the game. For example, the size of the hit determination area HA is increased when the player is inexperienced, and decreased when the player is experienced. This makes it possible to set the difficulty level by a simple process.

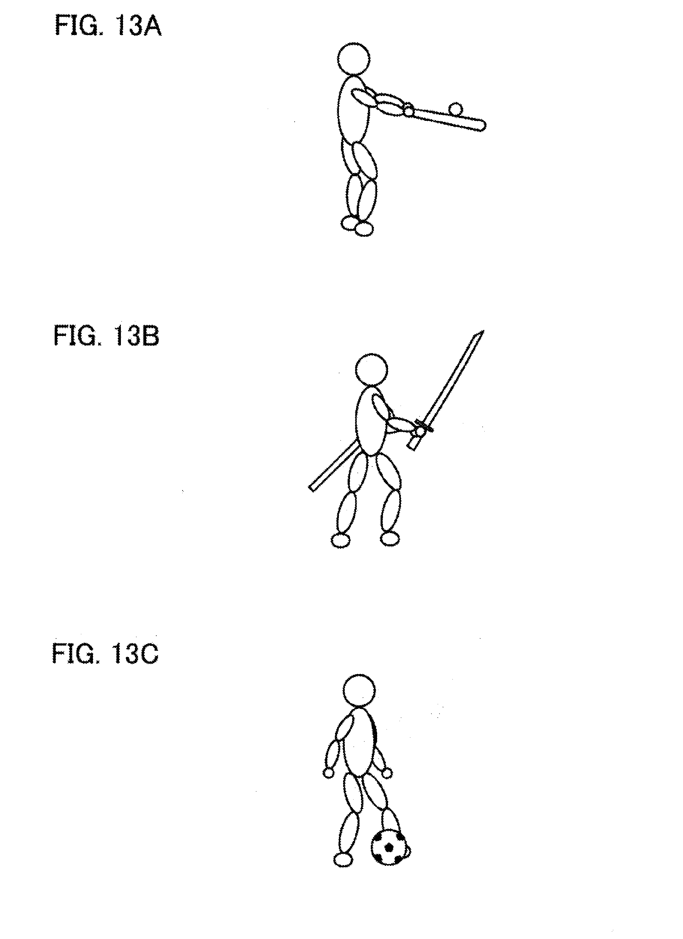

A case where the method according to this embodiment is applied to a tennis game has been described above. Note that this embodiment is not limited thereto. For example, this embodiment may be applied to a baseball game (see FIG. 13A). In this case, the hit object is a bat possessed (held) by the character, and the hit target is a ball. The rotation state and the like of the ball that is hit by the bat are set based on the rotation angle γ of the controller 200 around the Z-axis, for example. When applying this embodiment to a golf game, the hit object is a club possessed by the character, and the hit target is a golf ball. In this case, the rotation state and the like of the ball are set based on the rotation angle γ.

This embodiment may also be applied to a sword fighting game (see FIG. 13B). In this case, the hit object is a sword possessed by the character, and the hit target is the opposing character (each section title of the opposing character) or the like. The direction and the like of the blade of the sword are set based on the rotation angle γ of the controller 200 around the Z-axis. For example, the sharpness of the sword increases when the rotation angle γ (i.e., the direction the blade of the sword) is appropriate. A situation in which the character strikes the opposing character with the back of the sword can be produced by controlling the direction of the sword based on the rotation angle γ, for example.

The hit object is not limited to the object possessed (held) by the character shown in FIGS. 13A and 13B, but may a part (e.g., hand or foot) of the character. When implementing a soccer game shown in FIG. 13C, the hit object is the foot or the head of the character, and the hit target is a soccer ball. In this case, a twist or the like of the foot when kicking the ball may be expressed, and the rotation state and the like of the ball that has been kicked by the character may be set based on the rotation angle γ of the controller 200 around the Z-axis. When implementing a volleyball game, the hit object is the hand of the character, and the hit target is a volleyball. In this case, the rotation state and the like of the ball at the time of attack or service may be set based on the rotation angle γ of the controller 200 around the Z-axis.

In the baseball game and the sword fighting game shown in FIGS. 13A and 13B, the controller 200 may be placed in a case that imitates a bat or a sword, for example. In the soccer game shown in FIG. 13C, the controller 200 may be attached to the foot of the player using a band or the like.

### 2.5 Character motion process

A case of performing the hit calculation process using rotation angle information about the controller 200 has been described above. A character motion process may be performed by utilizing the rotation angle information. For example, the character is caused to make a motion that is determined based on the acquired rotation angle information. Specifically, the character is caused to make a motion that is determined based on the rotation angles α and β (first rotation angle information and second rotation angle information) around the X-axis and the Y-axis. More specifically, a motion blend ratio is calculated based on the rotation angles α and β, and the reference motions are blended in the calculated motion blend ratio to generate a motion of the character. The character is caused to make the generated motion.

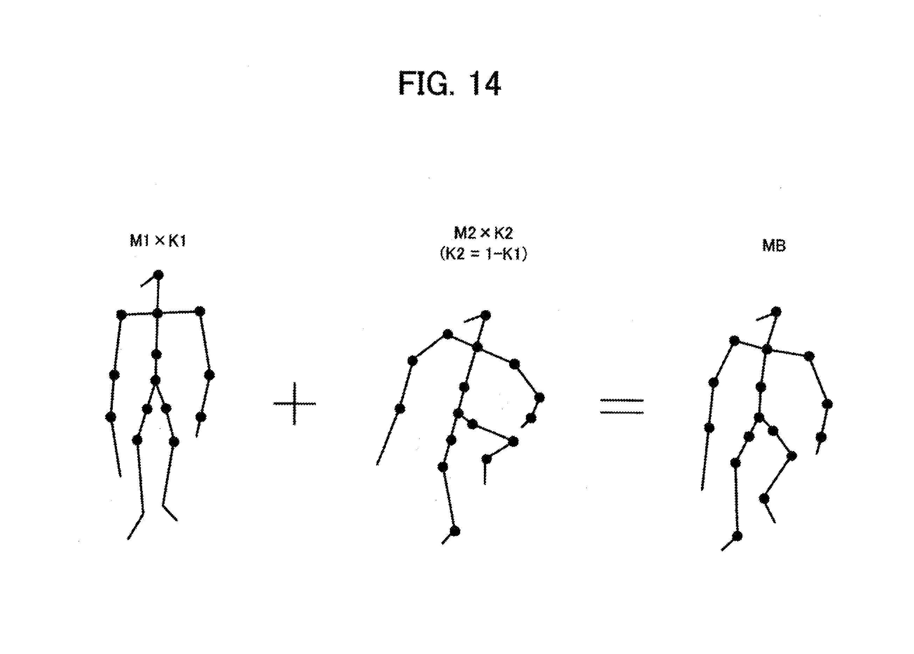

FIG. 14 is a view showing the motion blend principle. In FIG. 14, a reference motion M1 and a reference motion M2 are blended to generate a motion MB. This motion blend process is expressed by "MB=M1×K1+M2×K2". K1 and K2 correspond to the motion blend ratio, and the relationship "K1+K2=1" is satisfied.

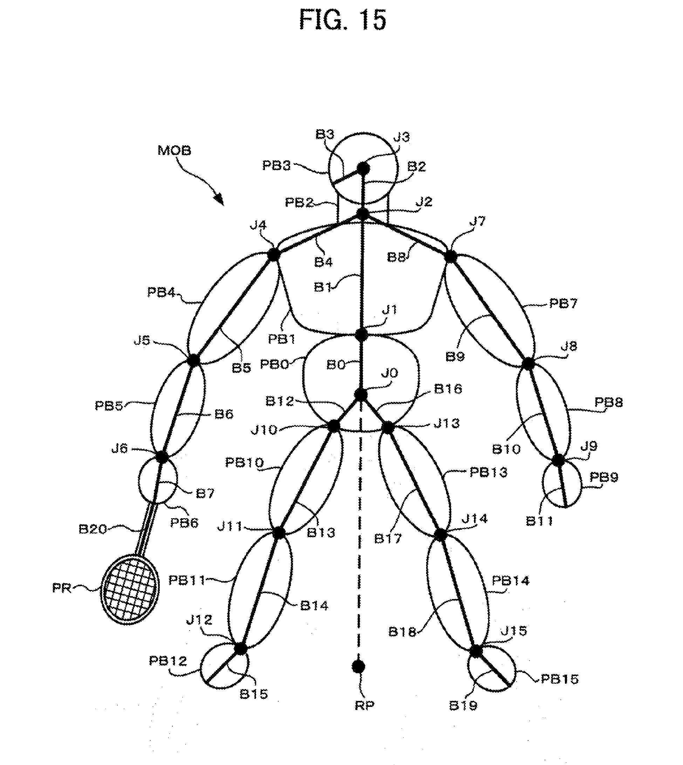

As shown in FIG. 15, the character is formed by a plurality of part objects PBO to PB 15, for example. The position and the direction of each part object are specified by the positions (positions of joints J0 to J15) and the rotation angles (relative rotation angle of child bone with respect to parent bone) of bones B0 to B19 that form a skeleton model of the character. Data that indicates the positions and the rotation angles of the bones is stored in the motion storage section 174 shown in FIG 1 as the character motion data. The motion blend process shown in FIG. 14 is implemented by performing a process expressed by "MB=M1×K1+M2×K2" on the data (matrix data) of each bone of the skeleton. Note that only the rotation angle of the bone may be included in the motion data, and the position of the bone (joint position) may be included in the character model object data.

In this embodiment, the reference motions corresponding to the height of the possessed object (e.g., racket) (PR in FIG. 14) or the part object of the character are provided, and the reference motions are blended by the motion blend process shown in FIG. 14 to generate a motion of the character.

Specifically, the motion storage section 174 shown in FIG. 1 stores a plurality of first height reference motions that are reference motions when the possessed object (or part object) of the character is positioned at the first height. The motion storage section 174 also stores at least one second height reference motion that is a reference motion when the possessed object is positioned at the second height. The motion processing section 112 blends a plurality of first height reference motions and at least one second height reference motion to generate a motion of the character.

The first height reference motion is provided on the assumption that the possessed object (part object) is positioned at the first height. Note that the height of the possessed object need not be identical among a plurality of first height reference motions. The second height reference motion is provided on the assumption that the possessed object (part object) is positioned at the second height (i.e., a height differing from the first height). Note that the height of the possessed object need not be identical among a plurality of second height reference motions.

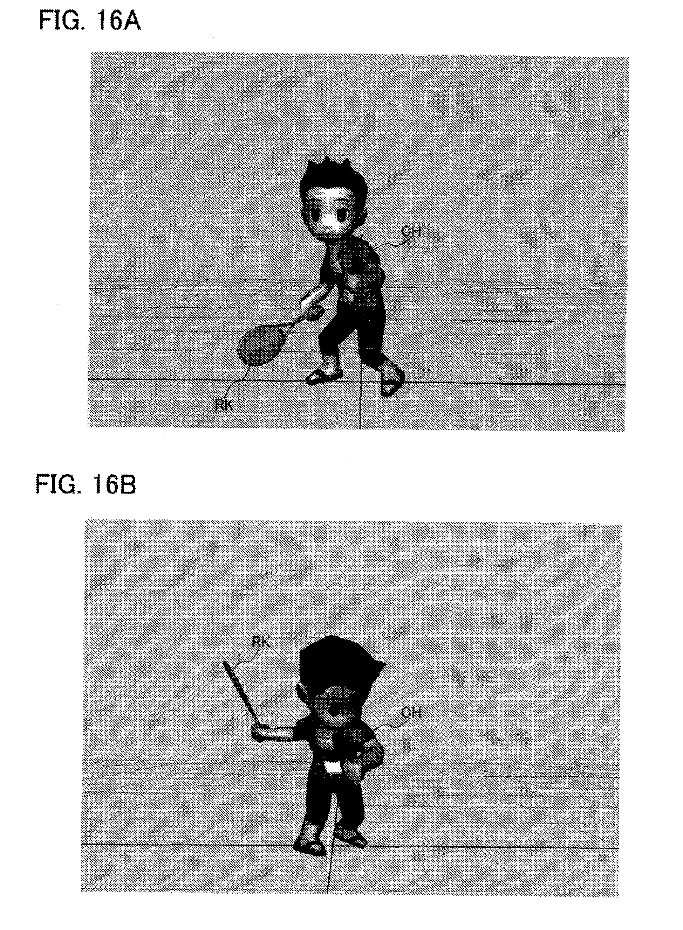

FIGS. 16A and 16B show examples of the first height reference motion. The reference motions shown in FIGS. 16A and 16B are motions when the racket RK is positioned at a low height. FIG. 16A shows a motion at a moment of impact (when the ball is hit), and FIG. 16B shows a swing-back motion. In FIGS. 16A and 16B, the character CH is observed from a different viewpoint position (i.e., the position of the virtual camera). FIG. 16A is a view showing the character CH from the front side, and FIG. 16B is a view showing the character CH from the right side.

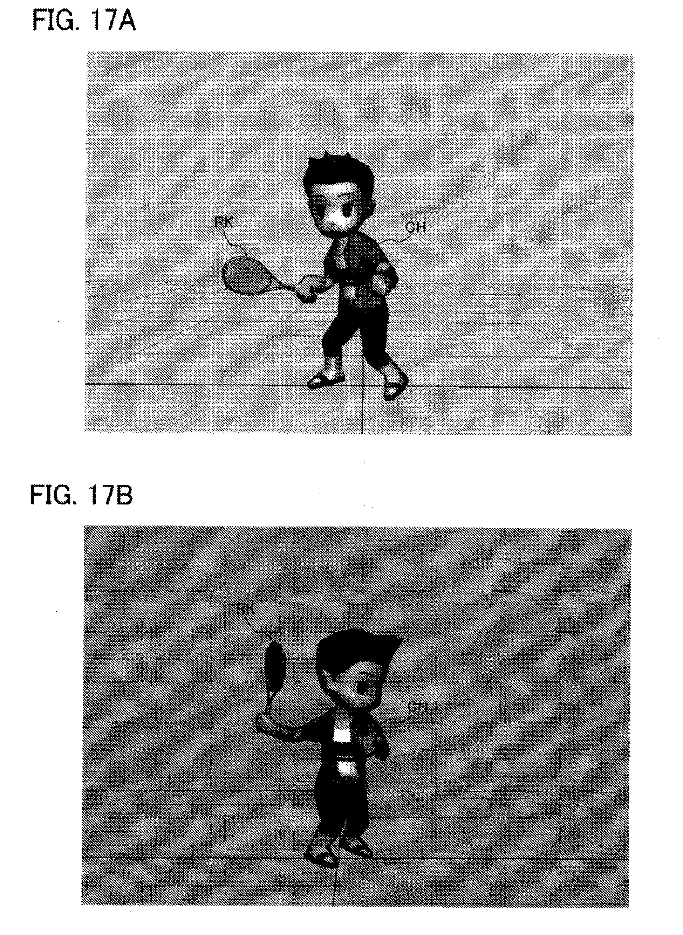

FIGS. 17A and 17B show examples of the second height reference motion. The reference motions shown in FIGS. 17A and 17B are motions when the racket RK is positioned at a high height as compared with FIGS. 16A and 16B. FIG. 17A shows a motion at a moment of impact in the same manner as FIG. 16A, and FIG. 17B shows a swing-back motion in the same manner as FIG. 16B.

As is clear from the comparison between FIGS. 16A and 17A, the position of the racket RK shown in FIG. 17A is higher than that shown in FIG. 16A. As is clear from the comparison between FIGS. 16B and 17B, the position of the racket RK shown in FIG. 17B is higher than that shown in FIG. 16B.

In this embodiment, the first height reference motion shown in FIGS. 16A and 16B and the second height reference motion shown in FIGS. 17A and 17B are blended by the motion blend method described with reference to FIG. 14 to generate a motion of the character CH. Specifically, when the rotation angles α and β of the controller 200 around the X-axis and the Y-axis (first rotation angle information around the first coordinate axis and second rotation angle information around the second coordinate axis) have been acquired, the motion blend ratio is calculated based on the rotation angles α and β. The first height reference motion shown in FIGS. 16A and 16B and the second height reference motion shown in FIGS. 17A and 17B are blended in the calculated motion blend ratio to generate a motion of the character CH.

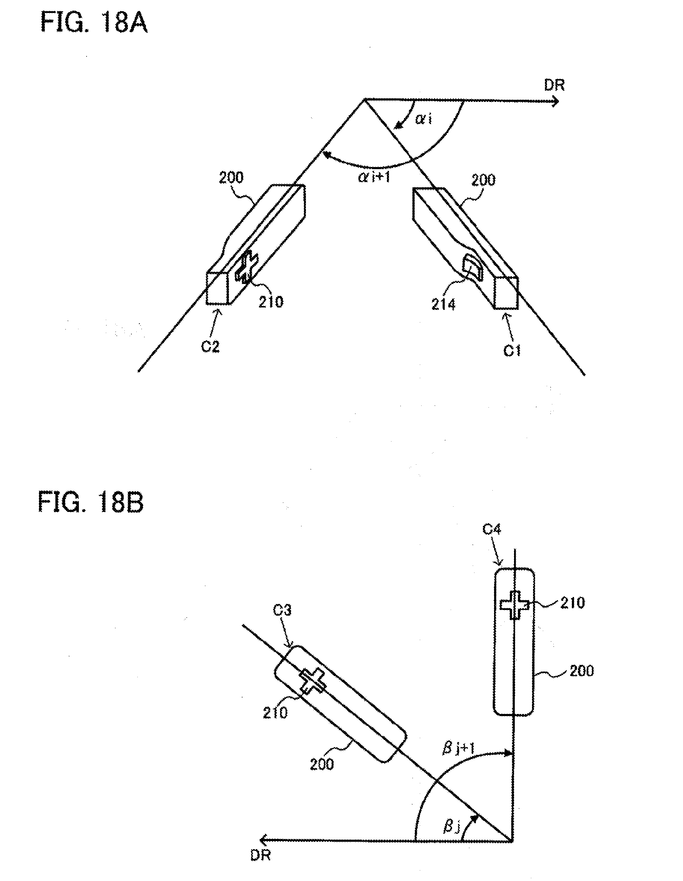

For example, C 1 in FIG. 18A indicates that the rotation angle α of the controller 200 around the X-axis with respect to the reference direction DR is αi. C2 in FIG. 18A indicates that the rotation angle α of the controller 200 around the X-axis with respect to the reference direction DR is αi+1.

C3 in FIG. 18B indicates that the rotation angle β of the controller 200 around the Y-axis with respect to the reference direction DR is βj. C2 in FIG. 18B indicates that the rotation angle β of the controller 200 around the Y-axis with respect to the reference direction DR is βj+1.

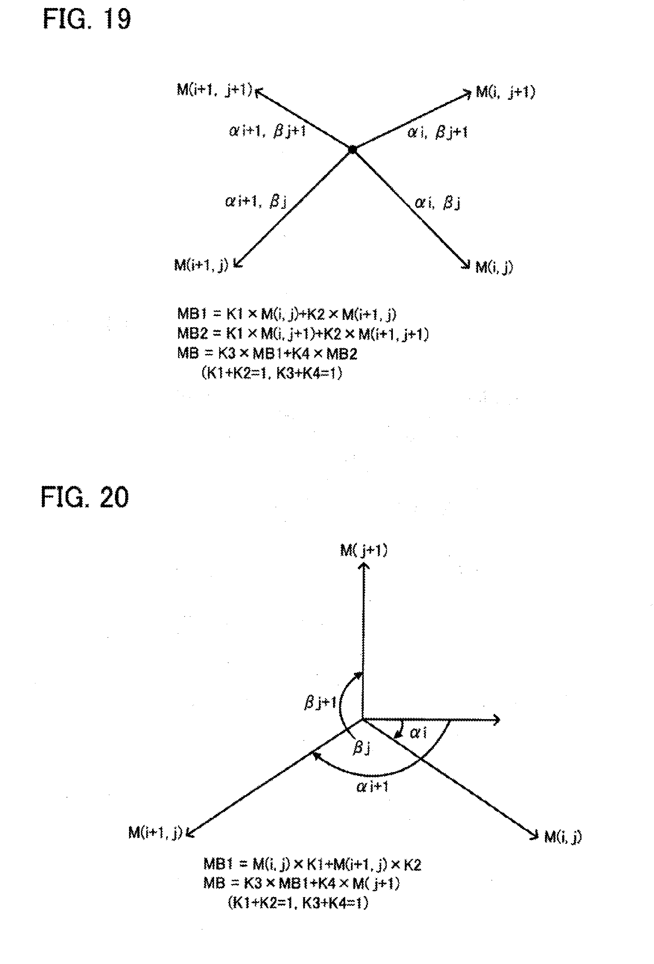

In FIG. 19, a first reference motion M(i, j) that is a reference motion when the rotation angle α around the X-axis (first rotation angle information in a broad sense) is αi and the rotation angle β around the Y-axis (second rotation angle information in a broad sense) is βj is provided as the first height reference motion. A second reference motion M(i+1, j) that is a reference motion when the rotation angle α around the X-axis is αi+1 and the rotation angle β around the Y-axis is βj is also provided as the first height reference motion.

The first and second first height reference motions M(i, j) and M(i+1, j) correspond to the reference motions shown in FIGS. 16A and 16B when the racket RK is positioned at a low height, for example. Data that indicates the motions M(i, j) and M(i+1, j) is stored in the motion storage section 174.

In FIG. 18, a third reference motion M(i, j+1) that is a reference motion when the rotation angle α around the X-axis is αi and the rotation angle β around the Y-axis is βj+1 is provided as the second height reference motion. A fourth reference motion M(i+1, j+1) that is a reference motion when the rotation angle α around the X-axis is αi+1 and the rotation angle β around the Y-axis is βj+1 is also provided as the second height reference motion.

The third and fourth second height reference motions M(i, j+1) and M(i+1, j+1) correspond to the reference motions shown in FIGS. 17A and 17B when the racket RK is positioned at a high height, for example. Data that indicates the motions M(i, j+1) and M(i+1, j+1) is stored in the motion storage section 174.

When the rotation angle α of the controller 200 around the X-axis is αiα≤α≤i+1 and the rotation angle β of the controller 200 around the Y-axis is βj≤β≤βj+1, the first reference motion M(i, j), the second reference motion M(i+1, j), the third reference motion M(i, j+1), and the fourth reference motion M(i+1, j+1) are selected as the motion blend target reference motions. The motion blend ratio is calculated based on the rotation angles α and β. The first reference motion M(i, j), the second reference motion M(i+1, j), the third reference motion M(i, j+1), and the fourth reference motion M(i+1, j+1) are blended in the calculated motion blend ratio to generate the motion MB of the character CH.

For example, the first reference motion M(i, j) and the second reference motion M(i+1,j) are blended to generate a motion MB1 (=K1×M(i,j)+K2×M(i+1,j)). The third reference motion M(i, j+1) and the fourth reference motion M(i+1, j+1) are blended to generate a motion MB2 (=K1×M(i, j+1)+K2×M(i+1, j+1)). The motion MB1 and the motion MB2 are blended to generate the final motion MB (=K3×MB1+K4×MB2) of the character.

The relationship "K1+K2=1" and the relationship "K3+K4=1" are satisfied. K1 and K2 (=1-K1) are calculated based on the relationship between the rotation angle α of the controller 200, αi, and αi+1. For example, K1=1 and K2=0 when α=αi, and K1=0 and K2=1 when α=αi+1. K1=K2=1/2 when the rotation angle α is centered between αi and αi+1.

Likewise, K3 and K4 (=1-K3) are calculated based on the relationship between the rotation angle β of the controller 200, βj, and βj+1. For example, K3=1 and K4=0 when β=βj, and K3=0 and K4=1 when β=βj+1. K3=K4=1/2 when the rotation angle β is centered between βj and βj+1.

Although FIG. 19 shows a case where the number of motion blend target second height reference motions is two (M(i, j+1) and M(i+1, j+1)), the number of motion blend target second height reference motions may be one. FIG. 20 shows an example in which the number of motion blend target second height reference motions may be one.

In FIG. 20, a first reference motion M(i, j) that is a reference motion when the rotation angle α around the X-axis is αi and the rotation angle β around the Y-axis is βj, and a second reference motion M(i+1, j) that is a reference motion when the rotation angle α around the X-axis is αi+1 and the rotation angle β around the Y-axis is βj are provided as the first height reference motions in the same manner as in FIG. 19.

In FIG. 20, a third reference motion M(j+1) that is a reference motion when the rotation angle β around the Y-axis is βj+1 is provided as the second height reference motion. The third reference motion M(j+1) may be a service motion or a smash motion in which the character holds the racket vertically, for example.

When the rotation angle α of the controller 200 around the X-axis is αi≤α≤αi+1 and the rotation angle β of the controller 200 around the Y-axis is βj≤β≤βj+1, the first reference motion M(i, j), the second reference motion M(i+1, j), and the third reference motion M(j+1) are selected. The motion blend ratio is calculated based on the rotation angles α and β. The first reference motion M(i, j), the second reference motion M(i+1, j), and the third reference motion M(j+1) are blended in the calculated motion blend ratio to generate the motion MB of the character CH.

For example, the first reference motion M(i, j) and the second reference motion M(i+1, j) are blended to generate the motion MB1 (=K1×M(i, j)+K2×M(i+1, j)). The motion MB1 and the third reference motion M(j+1) are blended to generate the final motion MB (=K3×MB1+K4×M(j+1)) of the character.

The relationship "K1+K2=1" and the relationship "K3+K4=1" are satisfied. K1 and K2 are calculated based on the relationship between the rotation angle α of the controller 200, αi, and αi+1. Likewise, K3 and K4 are calculated based on the relationship between the rotation angle β of the controller 200, βj, and βj+1.

According to this embodiment, the first height reference motion and the second height reference motion corresponding to the height of the possessed object (or part object) of the character are provided. The first height reference motion and the second height reference motion are blended to generate a motion of the character. This makes it possible to implement a motion blend process based on the possessed object of the character so that the path (e.g., swing path) of the possessed object and the like can be properly expressed. Therefore, a novel motion blend process can be implemented.

According to this embodiment, the motion blend ratio is calculated based on the rotation angle information about the controller, and the first height reference motion and the second height reference motion are blended in the calculated motion blend ratio. This makes it possible to generate a motion for which the height of the possessed object (part object) of the character is set based on the rotation angle information about the controller. Therefore, a motion in which the path of the possessed object or the like changes based on rotation of the controller can be generated so that a more realistic motion can be generated.

According to this embodiment, a realistic path of the possessed object or the part object of the character can be expressed while minimizing the amount of reference motion data, for example. Therefore, a realistic image representation can be implemented with a small amount of motion data.

When the rotation angle γ (third rotation angle information) of the controller 200 around the Z-axis is acquired as the operation information, it is desirable to control the motion of the character also taking account of the rotation angle γ. For example, the character is controlled so that the character makes a flat shot motion when the rotation angle γ of the controller 200 corresponds to the angle of the side of the racket when playing a flat shot, and makes a topspin shot motion when the rotation angle γ corresponds to the angle of the side of the racket when playing a topspin shot. The character is controlled so that the character makes a slice shot motion when the rotation angle γ corresponds to the angle of the side of the racket when playing a slice shot.

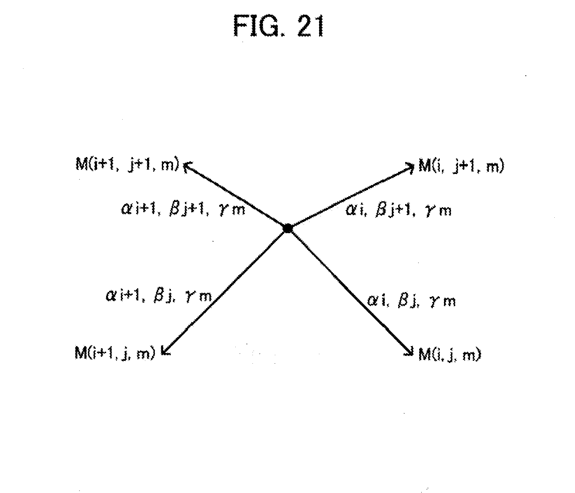

Specifically, as shown in FIG. 21, a first reference motion M(i, j, m) when α=αi, β=βj, and γ=γm, a second reference motion M(i+1,j, m) when α=αi+1, β=βj, and γ=γm, a third reference motion M(i, j+1, m) when α=αi, β=βj+1, and γ=γm, and a fourth reference motion M(i+1, j+1, m) when α=αi+1, β=βj+1, and γ=γm are stored in the motion storage section 174. The first reference motion M(i, j, m), the second reference motion M(i+1,j, m), the third reference motion M(i, j+1, m), and the fourth reference motion M(i+1,j+1, m) are blended to generate a motion of the character.

The motion blend ratio is calculated based on the relationship between α, αi, and αi+1, the relationship between β, βj, and βj+1, and the like in the same manner as in FIG. 19. A first reference motion M(i, j, m), a second reference motion M(i+1, j, m), a third reference motion M(i, j+1, m), and a fourth reference motion M(j+1, m) may be blended to generate a motion of the character in the same manner as in FIG. 20.

For example, a plurality of angular ranges corresponding to a flat shot, a topspin shot, a slice shot, and the like may be provided for the rotation angle γ, and a first reference motion, a second reference motion, a third reference motion, and a fourth reference motion corresponding to each angular range are provided. Specifically, a first reference motion, a second reference motion, a third reference motion, and a fourth reference motion for each angular range (e.g., a first reference motion, a second reference motion, a third reference motion, and a fourth reference motion for a first angular range, and a first reference motion, a second reference motion, a third reference motion, and a fourth reference motion for a second angular range) are provided. A first reference motion, a second reference motion, a third reference motion, and a fourth reference motion based on the rotation angle γ may be selected based on the angular range to which the rotation angle γ belongs.

Alternatively, a motion generated based on the rotation angles α and β using the method shown in FIG. 19 or 20 may be corrected based on the rotation angle γ to generate the final motion of the character. For example, a motion is generated based on the rotation angles α and β, and the rotation angle (relative rotation angle) of the arm bone B5 with respect to the shoulder bone B4 (see FIG. 15) is corrected based on the rotation angle γ of the controller 200. For example, when the character plays a flat shot, the rotation angle of the bone B5 with respect to the bone B4 is corrected based on the rotation angle γ so that the character swings its arm to play a flat shot. Likewise, when the character plays a topspin shot or a slice shot, the rotation angle of the bone B5 with respect to the bone B4 is corrected based on the rotation angle γ so that the character swings its arm to play a topspin shot or a slice shot.

Alternatively, the rotation angle of the racket bone B20 with respect to the hand bone B7 (see FIG. 15) may be corrected based on the rotation angle γ of the controller 200. Specifically, the rotation angle of the bone B20 with respect to the bone B7 is corrected so that the character swings its arm to play a flat shot, a topspin shot, or a slice shot.

The amount of motion data can be reduced as compared with the method shown in FIG. 21 by thus correcting the motion based on the rotation angle γ, so that realistic motion representation can be implemented with a small amount of data.

In this embodiment, a motion may be controlled using a reference motion based on the swing force of the controller 200 or the game state (state during the game) in addition to the rotation angle γ of the controller 200.

For example, when the player has strongly swung the controller 200, a reference motion that causes the character to hold the racket with both hands is used. Specifically, the character makes a breathing motion (i.e., the character aims the racket held with both hands in each direction (given direction)).

When the character is positioned near the net, a volley operation reference motion is used. Specifically, the character makes a breathing motion (i.e., the character aims the racket in each direction) near the net.

When the character follows the ball, a movement reference motion is used. Specifically, the character makes a running motion (i.e., the character follows the ball while aiming the racket at each direction).

It is desirable to perform a motion blend process when changing the reference motion.

For example, when the character that stands ready while holding the racket starts to run after the ball, a ready reference motion is gradually changed to a movement reference motion by the motion blend process. An intermediate movement reference motion is generated by blending two reference motions. For example, a forward movement reference motion and a diagonally forward right movement reference motion are blended to generate a movement reference motion in the intermediate direction between the forward direction and the diagonally forward right direction.

In this case, since motion is generated using the reference motion, the motion can be changed while performing control based on the rotation angle information about the controller. Therefore, the character can be controlled more intuitively.

Each reference motion described in connection with this embodiment changes with time. The reference motions that change with time are blended to form a swing path or cause the character to face in an arbitrary direction.

Therefore, the character moves in a lively way instead of making a robot-like motion when the player has swung or stopped the controller 200. Since arbitrary frames of the reference motions are blended, a motion generated under control of the controller 200 can be reproduced on the screen instead of reproducing a motion provided in advance. Therefore, the character can be controlled more intuitively while maintaining motion elements necessary for the game.

### 8. Specific processing

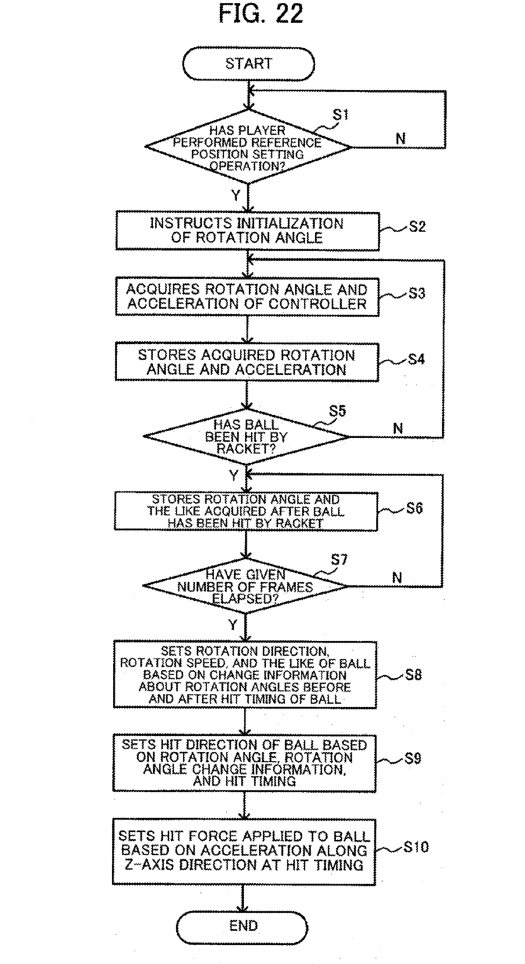

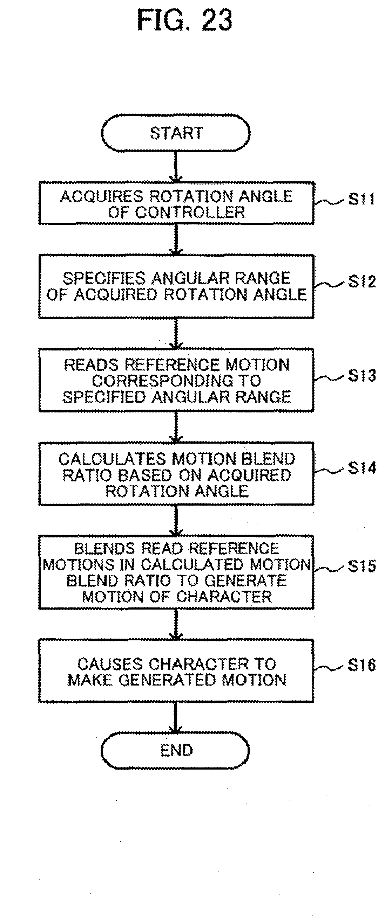

A specific processing example according to this embodiment is described below using flowcharts shown in FIGS. 22 and 23.

FIG. 22 is a flowchart showing the hit calculation process. First, whether or not the player has performed the reference position setting operation described with reference to FIG. 11 is determined (step S1). When the player has performed the reference position setting operation, initialization of the rotation angle is instructed (step S2). For example, the rotation angles (α, β, γ) of the controller 200 are set to the initial values. The rotation angle and the acceleration of the controller 200 are acquired, and stored in the storage section 170 (steps S3 and S4).

When the ball has been hit by the racket, the rotation angle and the like acquired after the ball has been hit by the racket are stored until a given number of frames (e.g., several frames) elapse (steps S5, S6, and S7). The rotation angle and the like acquired during the hit determination period including the timings before and after the hit timing are thus stored.

The rotation direction, the rotation speed, and the like of the ball are set based on the change information about the rotation angles before and after (first and second timings) the hit timing of the ball, as described with reference to FIGS. 8A to 8C (step S8). For example, the rotation direction is set so that the ball rotates in the forward direction when the character plays a topspin shot, and rotates in the reverse direction when the character plays a slice shot. When the rotation angle (γ) has changed to a large extent across the hit timing, the rotation speed (amount of rotation) of the ball is increased.

The hit direction of the ball is set based on the rotation angle of the controller 200, the rotation angle change information, and the hit timing (step S9). For example, the hit direction of the ball is set to the rightward direction when the hit timing is late, and is set to the leftward direction when the hit timing is early. The hit force applied to the ball is then set based on the acceleration along the Z-axis direction at the hit timing, as described with reference to FIG. 10 (step S10).

FIG. 23 is a flowchart showing the motion process. First, the rotation angle (α, β) of the controller 200 is acquired (step S11). The angular range of the acquired rotation angle is then specified, as described with reference to FIGS. 19, 20, etc. (step S12).

The reference motion corresponding to the specified angular range is read (step S13). Taking FIG. 19 as an example, a first reference motion M(i, j), a second reference motion M(i+1,j), a third reference motion M(i, j+1), and a fourth reference motion M(i+1, j+1) are read as reference motions corresponding to the angular ranges "αi≤α≤αi+1" and "βj≤β≤βj+1". The motion blend ratio (K1, K2, K3, K4) is calculated based on the acquired rotation angle (α, β) (step S14). The reference motions that have been read are blended in the calculated motion blend ratio to generate a motion of the character (step S15). In this case, the motion is corrected based on the rotation angle (γ), for example. The character is caused to make the generated motion (corrected motion) (step S16).

Although some embodiments of the invention have been described in detail above, those skilled in the art would readily appreciate that many modifications are possible in the embodiments without materially departing from the novel teachings and advantages of the invention. Accordingly, such modifications are intended to be included within the scope of the invention. Any term (e.g., racket and ball) cited with a different term (e.g., hit object and hit target) having a broader meaning or the same meaning at least once in the specification and the drawings may be replaced by the different term in any place in the specification and the drawings. The hit calculation process, the motion process, and the like are not limited to those described in connection with the above embodiments. Methods equivalent to these methods are included within the scope of the invention. The invention may be applied to various games. The invention may be applied to various image generation systems such as an arcade game system, a consumer game system, a large-scale attraction system in which a number of players participate, a simulator, a multimedia terminal, a system board that generates a game image, and a portable telephone.

## Claims

1. An image generation system comprising:
an operation information acquisition section that acquires operation information based on sensor information from a controller that includes a sensor, the operation information acquisition section acquiring rotation angle information about the controller around a given coordinate axis as the operation information;
a hit calculation section that performs a hit calculation process, the hit calculation process setting at least one of a moving state and an action state of a hit target that has been hit by a hit object based on the rotation angle information that has been acquired by the operation information acquisition section; and
an image generation section that generates an image based on the operation information.

2. The image generation system as defined in claim 1,
the hit calculation section setting at least one of the moving state and the action state of the hit target that has been hit by the hit object based on the rotation angle information about the controller at a hit timing when the hit target has been hit by the hit object.

3. The image generation system as defined in claim 2,
the operation information acquisition section acquiring third rotation angle information that is the rotation angle information around a third coordinate axis, when a coordinate axis that is set along a long axis direction of the controller is referred to as the third coordinate axis, and coordinate axes that perpendicularly intersect the third coordinate axis are referred to as a first coordinate axis and a second coordinate axis; and
the hit calculation section setting at least one of the moving state and the action state of the hit target that has been hit by the hit object based on the third rotation angle information around the third coordinate axis.

4. The image generation system as defined in claim 3,
the operation information acquisition section acquiring acceleration information in a direction along the third coordinate axis; and
the hit calculation section setting hit force information about the hit target due to the hit object based on the acceleration information in the direction along the third coordinate axis.

5. The image generation system as defined in any one of claims 1 to 4,
the hit calculation section setting at least one of the moving state and the action state of the hit target that has been hit by the hit object based on the rotation angle information about the controller during a hit determination period.

6. The image generation system as defined in claim 5,
the hit calculation section setting at least one of the moving state and the action state of the hit target that has been hit by the hit object based on change information about the rotation angle information about the controller during the hit determination period.

7. The image generation system as defined in claim 6,
the operation information acquisition section acquiring third rotation angle information that is the rotation angle information around a third coordinate axis, when a coordinate axis that is set along a long axis direction of the controller is referred to as the third coordinate axis, and coordinate axes that perpendicularly intersect the third coordinate axis are referred to as a first coordinate axis and a second coordinate axis; and
the hit calculation section setting at least one of the moving state and the action state of the hit target that has been hit by the hit object based on the third rotation angle information at a first timing during the hit determination period and the third rotation angle information at a second timing during the hit determination period.

8. The image generation system as defined in claim 7,
the operation information acquisition section acquiring acceleration information in a direction along the third coordinate axis; and
the hit calculation section setting hit force information about the hit target due to the hit object based on the acceleration information in the direction along the third coordinate axis at a hit timing between the first timing and the second timing.

9. The image generation system as defined in any one of claims 1 to 8, further comprising:
a reference position detection section that detects that the controller has been set to a reference position,
the sensor included in the controller being an angular velocity sensor; and
the operation information acquisition section acquiring the rotation angle information that is set to an initial value when the controller has been set to the reference position.

10. The image generation system as defined in claim 9,
the reference position detection section determining that the controller has been set to the reference position when a player has performed a given operation that indicates that the controller has been set to the reference position using the controller.

11. The image generation system as defined in any one of claims 1 to 10, further comprising:
a hit determination area setting section that sets a hit determination area for the hit target that is hit by the hit object,
the hit determination area setting section setting the hit determination area based on the rotation angle information that has been acquired by the operation information acquisition section.

12. The image generation system as defined in claim 11,
the operation information acquisition section acquiring first rotation angle information that is the rotation angle information around a first coordinate axis and second rotation angle information that is the rotation angle information around a second coordinate axis, when a coordinate axis that is set along a long axis direction of the controller is referred to as a third coordinate axis, and coordinate axes that perpendicularly intersect the third coordinate axis are referred to as the first coordinate axis and the second coordinate axis; and
the hit determination area setting section setting the hit determination area based on the first rotation angle information and the second rotation angle information that have been acquired by the operation information acquisition section.

13. The image generation system as defined in claim 11 or 12,
the hit object being a possessed object that is possessed by the character or a part object that forms the character; and
the hit determination area setting section changing the size of the hit determination area based on at least one of an ability parameter and a status parameter of the character.

14. The image generation system as defined in any one of claims 1 to 13, further comprising:
a character control section that controls the character,
the character control section causing the character to make a motion that is determined based on the rotation angle information that has been acquired by the operation information acquisition section.

15. The image generation system as defined in claim 14,
the operation information acquisition section acquiring first rotation angle information that is the rotation angle information around a first coordinate axis and second rotation angle information that is the rotation angle information around a second coordinate axis, when a coordinate axis that is set along a long axis direction of the controller is referred to as a third coordinate axis, and coordinate axes that perpendicularly intersect the third coordinate axis are referred to as the first coordinate axis and the second coordinate axis; and
the character control section causing the character to make a motion that is determined based on the first rotation angle information and the second rotation angle information that have been acquired by the operation information acquisition section.

16. An image generation method comprising:
acquiring operation information based on sensor information from a controller that includes a sensor, rotation angle information about the controller around a given coordinate axis being acquired as the operation information;
performing a hit calculation process that sets at least one of a moving state and an action state of a hit target that has been hit by a hit object based on the acquired rotation angle information; and
generating an image based on the operation information.

17. A computer program product storing a program code that causes a computer to execute the image generation method as defined in claim 16.
